# EUROPEAN PATENT APPLICATION

(11) **EP 4 554 059 A1**
(43) Date of publication of application: **14.05.2025**
(21) Application number: 23834489.9
(22) Date of filing: 28.04.2023
(51) Int. Cl.: H02K 3/28, H02K 3/12, H02K 1/16, H02K 7/116, B60K 1/00

(54) **STATOR, FLAT WIRE MOTOR, POWERTRAIN, AND VEHICLE**

(30) Priority: 06.07.2022 CN 202210797757; 22.07.2022 CN 202210869167; 22.07.2022 CN 202210871751; 10.10.2022 CN 202211252007; 10.10.2022 CN 202211252008
(71) Applicant: Zhejiang Leappower Technology Co., Ltd., Hangzhou, Zhejiang 310000 (CN); Zhejiang Leapmotor Technology Co., Ltd, Hangzhou, Zhejiang 310051 (CN)
(72) Inventor: ZHAO, Suzhen, Hangzhou, Zhejiang 310000 (CN); YU, Dong, Hangzhou, Zhejiang 310000 (CN); YUE, Weidong, Hangzhou, Zhejiang 310000 (CN); WU, Cun, Hangzhou, Zhejiang 310000 (CN)
(74) Representative: Herrero & Asociados, S.L.
(86) International application number: PCT/CN2023/091893
(87) International publication number: WO 2024/007713

(57) **Abstract**

The present application discloses a stator, a flat wire motor, a powertrain, and a vehicle. The stator comprises: a stator core, of which the inner wall is provided with a plurality of stator slots uniformly distributed in the circumferential direction of the stator core; and phase windings each comprising a plurality of parallel branches rotational and symmetrical in the circumferential direction, each parallel branch comprising a plurality of hair-pin coils which are connected by means of connecting wires and have different pitches, N layers of hair-pin coils being arranged in any stator slot, and the hair-pin coils of each parallel branch traversing N slot layers in different stator slots, wherein When N=(2n+1)×2, the combination of the total number of slot layers occupied by each parallel branch in each stator slot is 2n, or 2n, 2n-1, 2n-2; When N=2n×2, the combination of the total number of slot layers occupied by each parallel branch in each stator slot is 2n, 2n-1, or 2n, 2n-1, 2n-2; and when N=2n+1, the combination of the total number of slot layers occupied by each parallel branch in each stator slot is n, n-1, or n, n-1, n-2. In this way, the stator provided by the present application can avoid generation of a current loop, reduce the manufacturing cost, and improve the processing and manufacturing efficiency.

## Description

### TECHNICAL FIELD

The present disclosure relates to the technical field of flat-wire motor technologies, in particular to a stator, a flat-wire motor, a powertrain and a vehicle.

### BACKGROUND

With a vigorous promotion of new energy vehicles, new energy electric vehicles are becoming increasingly popular. The market's demand for performances of power systems of the electric vehicles keeps enhancing. The primary drive motor, as a power output component of the power system, is one of the most critical parts of an electric vehicle. Performance indicator requirements for the primary drive motor are also becoming increasingly stringent. The performance indicator requirements are such as high power densities, high torque densities, compact sizes, and lightweight. With the development of flat-wire technologies, the motors of electric vehicles gradually adopt flat-wire windings. The flat-wire windings may increase the stator slot fill factor, thereby further enhancing the power densities, the efficiency and the thermal conductivity of the motor.

The existing motors mainly adopt winding structures of wave windings or lap windings. By designing the flat-wire conductors in the winding structure into multiple layers, alternating current resistances of the motor may be effectively reduced. However, as the number of layers of the flat-wire conductor increases, the wiring or layout manner of the winding structure also vary. Currently, three phase windings of the winding structure typically includes a plurality of parallel branches. Circulating current is likely to occur between the branches. Additionally, there are diverse types of wire profiles of the hair-pin coils, resulting in complex production processes and high manufacturing costs.

### SUMMARY

Based on the above, the present disclosure provides a stator, a flat-wire motor, a powertrain and a vehicle.

According to a first aspect of the present disclosure, a stator of a flat-wire motor is provided. The stator includes a stator core and a stator winding. An inner wall of the stator core is provided with a plurality of stator slots equally spaced along a circumferential direction of the inner wall. The stator winding includes three phase windings. Each phase winding of the three phase windings includes a plurality of parallel branches. The plurality of parallel branches are rotationally symmetric in the circumferential direction. Each parallel branch of the plurality of parallel branches includes a plurality of hair-pin coils that are connected through a connection wire and have different pitches. N layers of the hair-pin coils are provided in each of the plurality of stator slots. The hair-pin coils of each of the plurality of parallel branches traverse through N slot layers in different stator slots. The three phase windings are arranged in a periodic manner along the circumferential direction of the stator core. In response to N = (2n+1) ×2, a combination of the total number of the slot layers occupied by each parallel branch in each stator slot is 2n, or the combination is 2n, 2n-1, 2n-2. In response to N = (2n) × 2, the combination of the total number of the slot layers occupied by each parallel branch in each stator slot is 2n, 2n-1, or the combination is 2n, 2n-1, 2n-2. In response to N = (2n) + 1, the combination of the total number of the slot layers occupied by each parallel branch in each stator slot is n, n-1, or the combination is n, n-1, n-2. N is a positive integer greater than or equal to 4. The total number of the slot layers occupied by each parallel branch in each stator slot is also a positive integer.

In some embodiments, in response to the total number of the slot layers occupied by each parallel branch in the stator slot being 1, a position of the 1 slot layer is either a first layer or an N-th layer of the stator slot. In response to the total number of the slot layers occupied by each parallel branch in the stator slot being 2, these 2 slot layers are arranged as adjacent to each other in the stator slot, or these 2 slot layers are arranged as the first layer and the N-th layer of the stator slot respectively. In response to the total number of the slot layers occupied by each parallel branch in the stator slot being 3, two of these 3 slot layers are arranged as adjacent to each other, while the position of the remaining 1 slot layer is either the first layer or the N-th layer of the stator slot, and is separated by four slot layers from the other two slot layers of the 3 slot layers. In response to the total number of the slot layers occupied by each parallel branch in the stator slot being 4, the 4 slot layers are divided into two groups separated by four slot layers. Each group includes two slot layers adjacent to each other.

In some embodiments, each phase winding includes three parallel branches.

In some embodiments, the number of the stator slots is 54 or 72.

In some embodiments, a pitch combination of the hair-pin coils in each parallel branch is 8, 9, 11, 12, 16.

In some embodiments, pitches of the hair-pin coils of each parallel branch in a same slot layer are all 9.

In some embodiments, pitches of the hair-pin coils of each parallel branch in the first slot layer or the N-th slot layer are 8, or the pitches are 8, 11.

In some embodiments, a lead-in end of each parallel branch is located at the N-th layer of the slot layers, a lead-out end is located at the (N-1)-th layer of the slot layers. In some embodiments, the lead-in end and the lead-out end of each parallel branch are both at the first slot layer and the N-th slot layer.

In some embodiments, welding pitches between the hair-pin coils of each parallel branch are 9 or 11.

In some embodiments, each parallel branch comprises a long-pitch hair-pin coil, a full-pitch hair-pin coil and a short-pitch hair-pin coil. The pitch of the long-pitch hair-pin coil is s/(2p) +a, the pitch of the full-pitch hair-pin coil is s/(2p), and the pitch of the short-pitch hair-pin coil is s/(2p) +a-4. s is the number of stator slots, p is the number of the plurality of parallel branches, and a is an integer greater than or equal to 2 and less than or equal to 4.

In some embodiments, in each parallel branch, a first leg of the short-pitch hair-pin coil is located at the k-th slot layer, a second leg of the short-pitch hair-pin coil is located at the (k+1)-th slot layer, a first leg of the long-pitch hair-pin coil is located at the (k+1)-th slot layer, a second leg of the long-pitch hair-pin coil is located at the (k+2)-th slot layer, a first leg and the second leg of the full-pitch hair-pin coil are both located at either the first slot layer or in the n-th slot layer. k is an odd number greater than or equal to 1 and less than or equal to n.

In some embodiments, the number of slots per pole per phase of the flat-wire motor is q. The voltage lead-out wires of the p parallel branches of each phase winding are located in s stator slots, and are at a same slot layer or adjacent slot layers of different stator slots. The neutral point lead-out wires of the p parallel branches of the each phase winding are located in s stator slots, and are at a same slot layer or adjacent slot layers of different stator slots.

In some embodiments, the voltage lead-out wires and the neutral point lead-out wires are all located at the first slot layer or at the n-th slot layer.

In some embodiments, the welding pitches between the hair-pin coils of each parallel branch are all s/(2p).

In some embodiments, n is an even number and a = 4. The short-pitch hair-pin coil is the full-pitch hair-pin coil. In a phase spread distribution of the three phase windings, polarity distribution of all odd-numbered layers is the same, and the polarity distribution of all even-numbered layers is also the same but is offset by one stator slot relative to the polarity distribution of all the odd-numbered layers.

In some embodiments, the number of slot layers of the stator slots is one of 4, 6, 8, or 10. The pitch combination of the hair-pin coils in each parallel branch is 10, 12, 14. The welding pitches between the hair-pin coils in each parallel branch are all 13.

In some embodiments, each hair-pin coil includes a first leg, a second leg, a connection segment, a first bent segment and a second bent segment. The first leg and the second leg are arranged in parallel and are inserted into slot layers in different stator slots respectively. The connection segment is connected to one end of the first leg and one end of the second leg. The first bent segment is connected to another end of the first leg. The second bent segment is connected to another end of the second leg. Each of the first bent segment and the second bent segment is further connected to a welding end.

In some embodiments, a bending direction of the first bent segment is parallel to that of the second bent segment. In some embodiments, the bending direction of the first bent segment is symmetrical to that of the second bent segment.

According to a second aspect of the present disclosure, a flat-wire motor is provided. The flat-wire motor includes a rotor and any of the above-mentioned stators. The rotor is arranged within a space enclosed by the inner wall of the stator core.

According to a third aspect of the present disclosure, a powertrain is provided. The powertrain includes a reducer and the flat-wire motor as described above. The flat-wire motor is connected to the reducer in a transmission manner.

According to a fourth aspect of the present disclosure, a vehicle is provided. The vehicle includes the powertrain as described above.

The advantage of the present disclosure is: distinguished from the related art, the present disclosure provides the stator, the flat-wire motor, the powertrain and the vehicle. By configuring the plurality of parallel branches of each phase winding as being rotationally symmetric in the circumferential direction, the magnetic field distribution among the plurality of parallel branches of each phase winding remains the same, and the electrical potentials are balanced. In this way, the circulating currents generated between the parallel branches are avoided, thereby significantly reducing additional alternating current copper losses at high frequencies. The efficiency of the flat-wire motor during a high-speed operation is enhanced, local overheating of the windings is avoided, and a service life of the flat-wire motor is extended. The hair-pin coils of each parallel branch traverse through N slot layers in different stator slots, thereby eliminating electrical potential phase differences of each phase winding caused by positions of a plurality of parallel branches in the stator slots. By limiting the number N of the slot layers in the stator slot and the corresponding total number of the slot layers occupied by each parallel branch in each stator slot, the number of types of wire profiles for the hair-pin coils is reduced. This in turn decreases the number of manufacturing molds required for the flat-wire motor, thereby lowering the manufacturing cost and effectively enhancing the processing and manufacturing efficiency.

### BRIEF DESCRIPTION OF THE DRAWINGS

Fig. 1 is a schematic structural diagram of a stator of a flat-wire motor according to an embodiment of the present disclosure.
Fig. 2 is a schematic structural diagram of a stator core of the stator in Fig. 1.
Fig. 3 is a schematic circuit diagram of parallel branches of each phase winding of the stator in Fig. 1, wherein the parallel branches are connected in a star configuration.
Fig. 4 is a schematic circuit diagram of the parallel branches of each phase winding of the stator in Fig. 1, wherein the parallel branches are connected in a delta configuration.
Fig. 5 is a schematic structural diagram of a hair-pin coil of the stator in Fig. 1.
Fig. 6 is another schematic structural diagram of the hair-pin coil of the stator in Fig. 1.
Fig. 7 is a schematic structural diagram of slot layers of a stator slot of the stator core in Fig. 2.
Fig. 8 is a schematic diagram of a first type of winding configuration of the U phase winding in a 6-pole and 54-slot flat-wire motor according to an embodiment of the present disclosure, wherein the number of slot layers is 4.
Fig. 9 is a schematic diagram of a second type of winding configuration of the U phase winding in a 6-pole and 54-slot flat-wire motor according to an embodiment of the present disclosure, wherein the number of slot layers is 4.
Fig. 10 is a schematic diagram of a winding configuration of the U phase winding in a 6-pole and 54-slot flat-wire motor according to an embodiment of the present disclosure, wherein the number of slot layers is 5.
Fig. 11 is a schematic diagram of a first type of winding configuration of the U phase winding in a 6-pole and 54-slot flat-wire motor according to an embodiment of the present disclosure, wherein the number of slot layers is 6.
Fig. 12 is a schematic diagram of a second type of winding configuration of the U phase winding in a 6-pole and 54-slot flat-wire motor according to an embodiment of the present disclosure, wherein the number of slot layers is 6.
Fig. 13 is a schematic diagram of a winding configuration of the U phase winding in a 6-pole and 54-slot flat-wire motor according to an embodiment of the present disclosure, wherein the number of slot layers is 7.
Fig. 14 is a schematic diagram of a winding configuration of the U phase winding in a 6-pole and 54-slot flat-wire motor according to an embodiment of the present disclosure, wherein the number of slot layers is 8.
Fig. 15 is a schematic diagram of a winding configuration of the U phase winding in a 6-pole and 54-slot flat-wire motor according to an embodiment of the present disclosure, wherein the number of slot layers is 9.
Fig. 16 is a schematic diagram of a winding configuration of the U phase winding in a 6-pole and 54-slot flat-wire motor according to an embodiment of the present disclosure, wherein the number of slot layers is 10.
Fig. 17 is a schematic diagram of a winding configuration of a first parallel branch of the U phase winding in a flat-wire motor according to an embodiment of the present disclosure, wherein the flat-wire motor includes 6 poles and 72 slots, the number of slot layers is 4, and a is 3.
Fig. 18 is a schematic diagram of a winding configuration of a second parallel branch of the U phase winding in the flat-wire motor in Fig. 17.
Fig. 19 is a schematic diagram of a winding configuration of a third parallel branch of the U phase winding in the flat-wire motor in Fig. 17.
Fig. 20 is a schematic diagram of a winding configuration of a first parallel branch of the U phase winding in a flat-wire motor according to an embodiment of the present disclosure, wherein the flat-wire motor includes 6 poles and 72 slots, the number of slot layers is 6, and a is 3.
Fig. 21 is a schematic diagram of a winding configuration of a second parallel branch of the U phase winding in the flat-wire motor in Fig. 20.
Fig. 22 is a schematic diagram of a winding configuration of a third parallel branch of the U phase winding in the flat-wire motor in Fig. 20.
Fig. 23 is a schematic diagram of a winding configuration of a first parallel branch of the U phase winding in a flat-wire motor according to an embodiment of the present disclosure, wherein the flat-wire motor includes 6 poles and 72 slots, the number of slot layers is 8, and a is 3.
Fig. 24 is a schematic diagram of a winding configuration of a second parallel branch of the U phase winding in the flat-wire motor in Fig. 23.
Fig. 25 is a schematic diagram of a winding configuration of a third parallel branch of the U phase winding in the flat-wire motor in Fig. 23.
Fig. 26 is a phase spread distribution diagram of a flat-wire motor according to an embodiment of the present disclosure, wherein the flat-wire motor includes 6 poles and 72 slots, the number of slot layers is 4, and a is 4.
Fig. 27 is a schematic diagram of a winding configuration of a first parallel branch of the U phase winding in the flat-wire motor in Fig. 26.
Fig. 28 is a schematic diagram of a winding configuration of a second parallel branch of the U phase winding in the flat-wire motor in Fig. 26.
Fig. 29 is a schematic diagram of a winding configuration of a third parallel branch of the U phase winding in the flat-wire motor in Fig. 26.
Fig. 30 is a schematic diagram of a winding configuration of a first parallel branch of the U phase winding in a flat-wire motor according to an embodiment of the present disclosure, wherein the flat-wire motor includes 6 poles and 72 slots, the number of slot layers is 6, and a is 4.
Fig. 31 is a schematic diagram of a winding configuration of a second parallel branch of the U phase winding in the flat-wire motor in Fig. 30.
Fig. 32 is a schematic diagram of a winding configuration of a third parallel branch of the U phase winding in the flat-wire motor in Fig. 30.
Fig. 33 is a schematic diagram of a winding configuration of a first parallel branch of the U phase winding in a flat-wire motor according to an embodiment of the present disclosure, wherein the flat-wire motor includes 6 poles and 72 slots, and the number of slot layers is 4, and a is 2.
Fig. 34 is a schematic diagram of a winding configuration of a second parallel branch of the U phase winding in the flat-wire motor in Fig. 33.
Fig. 35 is a schematic diagram of a winding configuration of a third parallel branch of the U phase winding in the flat-wire motor in Fig. 33.
Fig. 36 is a schematic diagram of a winding configuration of a first parallel branch of the U phase winding in a flat-wire motor according to an embodiment of the present disclosure, wherein the flat-wire motor includes 6 poles and 72 slots, the number of slot layers is 6, and a is 2.
Fig. 37 is a schematic diagram of a winding configuration of a second parallel branch of the U phase winding in the flat-wire motor in Fig. 36.
Fig. 38 is a schematic diagram of a winding configuration of a third parallel branch of the U phase winding in the flat-wire motor in Fig. 36.

### DETAILED DESCRIPTION

Technical schemes in embodiments of the present disclosure would be described clearly and thoroughly in conjunction with accompanying drawings of the embodiments of the present disclosure. Obviously, the described embodiments are only part of the embodiments, but not all of them. All other embodiments occurred to a person of ordinary skills in the art based on embodiments of the present disclosure without creative efforts should all be within the protection scope of the present disclosure.

The terms "first", "second", and "third" in this disclosure are only for the purpose of description, and should not be construed as indicating or implying relative importance or implicitly indicating the number of the technical features referred to. Therefore, the features preceded by "first", "second", and "third' may explicitly or implicitly include at least one of the features. In the description of the present disclosure, "a plurality of" means at least two, such as two, three, etc., unless otherwise specifically defined. In addition, the terms "include", "comprise" and any variations thereof are intended to cover non-exclusive inclusion. For example, a process, a method, a system, a product, or a device that includes a series of operations or units is not limited to the listed operations or units, but optionally further includes unlisted operations or units, or optionally further includes other operations or units inherent to these processes, methods, products or devices.

Reference to "embodiments" herein means that, a specific feature, structure or characteristic described in conjunction with the embodiments may be included in at least one embodiment of the present disclosure. The appearance of this phrase "embodiment" in various locations of the specification does not necessarily refer to the same embodiment, nor is it an independent or alternative embodiment mutually exclusive with other embodiments. Those skilled in the art may explicitly and implicitly understand that, the embodiments described herein may be combined with other embodiments.

For ease of understanding, the following is an explanation of the technical terms occurred in the present disclosure.

Stator: refers to a stationary part of a motor, a function of the stator is to generate a rotating magnetic field.

Rotor: refers to a rotatable component of the motor, a function of the rotor is to convert electrical energy into mechanical energy.

Pitch: refers to a distance spanned between two element edges of a same element of a motor winding on an armature surface. The pitch is typically represented by the number of stator slots defined on a stator core.

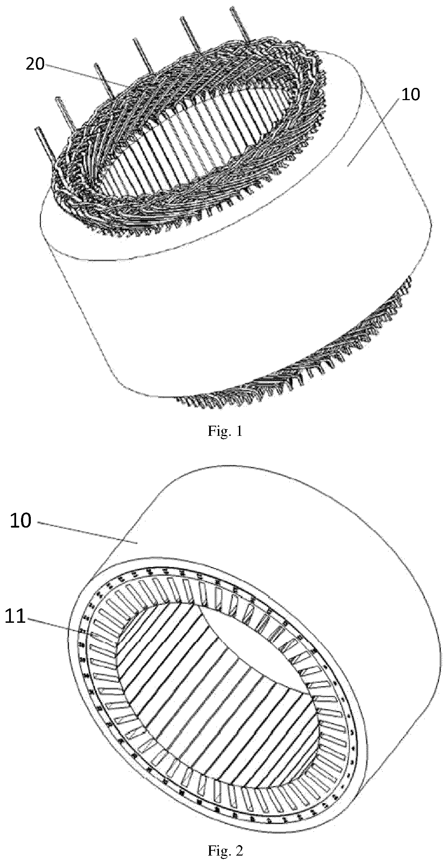

As illustrated in Fig. 1 and Fig. 2, Fig. 1 is a schematic structural diagram of a stator of a flat-wire motor according to an embodiment of the present disclosure, Fig. 2 is a schematic structural diagram of a stator core of the stator in Fig. 1. According an aspect of the present disclosure, a flat-wire motor is provided. The flat-wire motor includes a rotor and a stator. The rotor is arranged within a space enclosed by an inner wall of a stator core of the stator. For the flat-wire motor, the number of slots per pole per phase may be 3, the number of poles of the rotor may be an even number, slot-pole combinations of the flat-wire motor may be 6 poles with 54 slots, 8 poles with 72 slots, 10 poles with 90 slots, 12 poles with 108 slots, etc. which is not specifically limited in the present disclosure.

As illustrated in Fig. 1, the stator of the flat-wire motor includes a stator core 10 and a stator winding 20.

As illustrated in Fig. 2, the inner wall of the stator core 10 is provided with a plurality of equally spaced stator slots 11 along a circumferential direction of the inner wall. The number of the stator slots 11 is a multiple of 3. For example, the number of the stator slots 11 may be 54 or 72. Each stator slot 11 extends in an axial direction of the stator core 10, and is configured to penetrate through the inner wall of the stator core 10 along the axial direction of the stator core 10. The stator slot 11 is further divided into N layers along a radial direction of the stator core 10.

The stator winding 20 includes three phase windings that are arranged in a periodic manner along the circumferential direction of the stator core 10. The three phase windings are a U phase winding, a V phase winding, and a W phase winding, respectively. Each phase winding includes a plurality of parallel branches (hereinafter referred to as p parallel branches). The plurality of parallel branches are rotationally symmetric in the circumferential direction. For example, each phase winding may include three parallel branches. These three parallel branches are rotationally symmetric along the circumferential direction of the stator core 10. In some embodiments, each phase winding may include two or four parallel branches.

By configuring the plurality of parallel branches of each phase winding as being rotationally symmetric in the circumferential direction, magnetic field distributions among the plurality of parallel branches of each phase winding remain the same, and the electrical potentials are balanced. In this way, circulating currents generated between the parallel branches are avoided, thereby significantly reducing additional alternating current copper losses at high frequencies. The efficiency of the flat-wire motor during a high-speed operation is enhanced, local overheating of the windings is avoided, and a service life of the flat-wire motor is extended.

In the present embodiment, the stator includes three phase windings and the stator core 10. The phase difference between any two of the three phase windings is 120 electrical angles. The structure of the stator winding 20 is housed within the stator core 10. Each phase winding includes 3 parallel branches. A central axis of the stator core 10 serves as a rotation axis of the 3 parallel branches, the 3 parallel branches of a same phase winding are rotationally symmetric. When this stator is applied to the flat-wire motor, the central axis may also refer to a rotor centerline of the rotor of the flat-wire motor. The rotationally symmetric may refer to a situation, wherein one parallel branch of the same phase winding coincides, after moving a certain number of stator slots, with another parallel branch of the same phase winding.

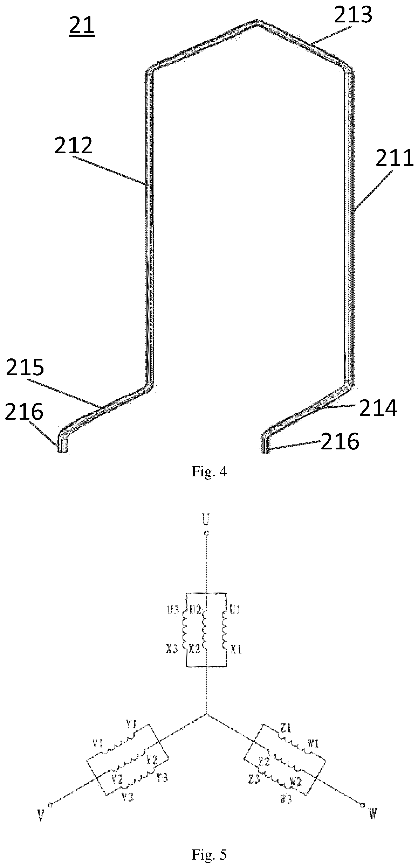

As illustrated in Fig. 5, Fig. 5 is a schematic circuit diagram of the parallel branches of each phase winding of the stator in Fig. 1, wherein the parallel branches are connected in a star configuration. Each phase winding includes 3 parallel branches.

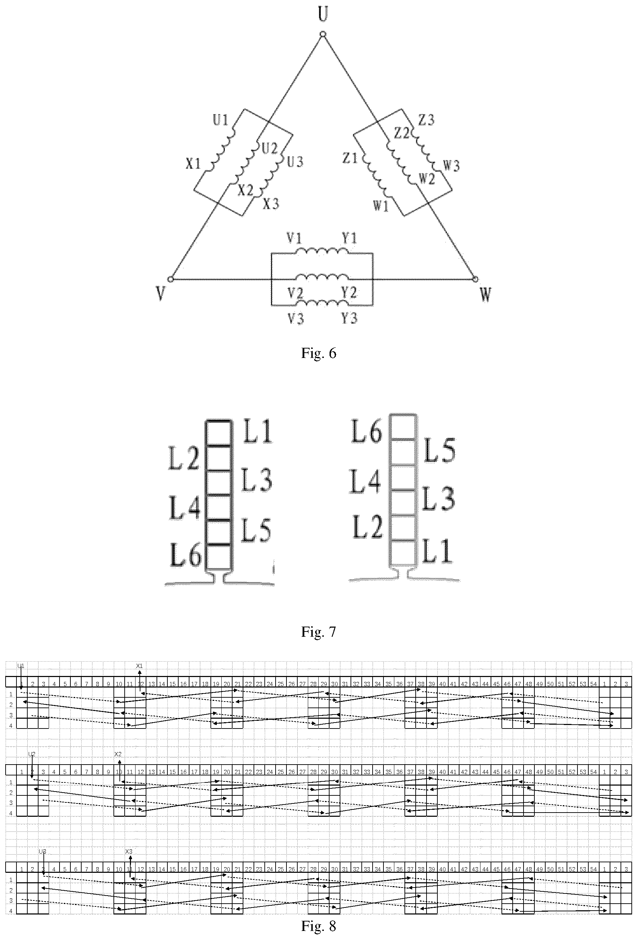

In some embodiments, as illustrated in Fig. 6, Fig. 6 is a schematic circuit diagram of the parallel branches of each phase winding of the stator in Fig. 1, wherein the parallel branches are connected in a delta configuration. Each phase winding includes 3 parallel branches.

As illustrated in Fig. 1, Fig. 2 and Fig. 3, Fig. 3 is a schematic structural diagram of a hair-pin coil of the stator in Fig. 1.

Each parallel branch includes a plurality of hair-pin coils 21 that are connected through a connection wire and have different pitches. Flat-wire conductors of n layers of hair-pin coils 21 are provided in each stator slot 11. n is a positive integer. In other words, each slot layer in the stator slot 11 is provided with flat-wire conductors. The hair-pin coil 21 is formed by flat-wire conductors. The cross section of a flat-wire conductor is rectangle. The flat-wire conductor is inserted into the stator slot 11. Each hair-pin coil 21 includes two parallelly arranged straight segments 211 and a connection segment 212 that connects the two straight segments 211 together. The straight segment 211 is inserted into the stator slot 11. The connection segment 212 is arranged outside the stator slot 11. The connection segment 212 may be U-shaped or V-shaped. A pitch of the hair-pin coil refers to the number of stator slots spanned by the parallelly arranged two straight segments 211 of the hair-pin coil 21. A welding pitch between hair-pin coils 21 refers to the number of stator slots spanned by adjacent straight segments 211 of two adjacent hair-pin coils 21 respectively.

The hair-pin coil 21 further includes a bent segment 213 connected to the straight segment 211. The bent segment 213 is also arranged outside the stator slot 11. The bent segment 213 and the connection segment 212 are respectively arranged on end faces of the stator core 10. In the same parallel branch, adjacent bent segments 213 of adjacent hair-pin coils are respectively connected through a connection wire for electrical conduction.

In some embodiments, the hair-pin coil 21 may be inserted into the stator slot 11 first, and then be bent to form the bent portion 223. After the hair-pin coil 21 is inserted into the stator slot 11, the connection segment 212 of the hair-pin coil 21 forms a wire-insertion end of the stator winding 20, while the bent portion 223 forms a welding end of the stator winding 20.

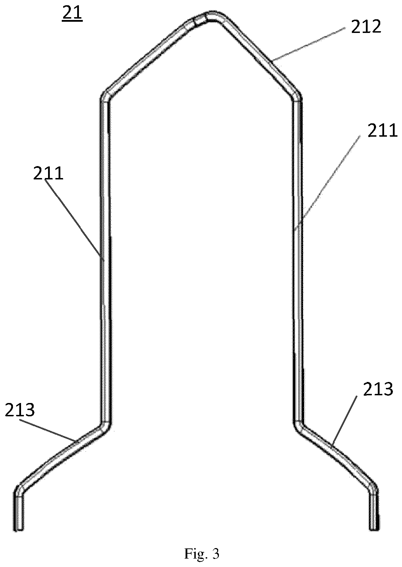

A bending direction of the hair-pin coil may also be configured to toward one side. In some other embodiments, as illustrated in Fig. 4, the bending directions of first bent segments 214 and second bent segments 215 of some hair-pin coils 21 are parallel for commutation winding. As illustrated in Fig. 3, the bending directions of the first bent segments 214 and the second bent segments 215 of the remaining hair-pin coils 21 are symmetrically arranged for in-phase winding.

In the present disclosure, N layers of hair-pin coils 21 are provided in each stator slot 11. In other words, each slot layer of the stator slot 11 is provided with two straight segments 211 of one hair-pin coil 21. The hair-pin coils 21 of each parallel branch traverse through N slot layers in different stator slots 11, thereby eliminating electrical potential phase differences of each phase winding caused by positions of the plurality of parallel branches in the stator slots. N is a positive integer greater than or equal to 4. For example, N may be 4, 5, 6, 7, 8, 9, or 10. For instance, when N is 4, 4 layers of straight segments 211 are provided in each stator slot 11.

Each of the plurality of parallel branches of the same phase traverses N slot layers in different stator slots. The stator slots 11 occupied by each phase winding are rotationally symmetric around the circumference of the stator. As a result, p branches of the same phase are perfectly symmetrical, thereby preventing circulating currents during a normal operation of the hair-pin motor, reducing copper losses in the motor, and enhancing the motor efficiency.

As illustrated in Fig. 7, Fig. 7 is a schematic structural diagram of slot layers of the stator slot of the stator core in Fig. 2. In a specific application scenario, N is 6. 6 layers of straight segments 211 are provided in each stator slot 11. In other words, 4 layers of flat-wire conductors are accommodated in each stator slot 11. The first layer is denoted as L1. The second layer is denoted as L2. The third layer is denoted as L3. The fourth layer is denoted as L4. The fifth layer is denoted as L5. The sixth layer is denoted as L6. The first slot layer is a slot bottom layer of the stator slot 11, and the sixth slot layer is a slot opening layer. In some embodiments, the first slot layer is the slot opening layer of the stator slot 11, and the sixth slot layer is the slot bottom layer.

In some embodiments, the hair-pin coils 21 within the same stator slot 11 are in a same phase, so that inter-phase insulation paper is not required between straight segments 211 of different layers in the same stator slot 11, thereby reducing an insulation cost of the flat-wire motor.

When N = (2n+1) × 2, a combination of the total number of the slot layers occupied by each parallel branch in each stator slot 11 is 2n, or the combination is 2n, 2n-1, 2n-2. When N = (2n) × 2, the combination of the total number of the slot layers occupied by each parallel branch in each stator slot 11 is 2n, 2n-1, or the combination is 2n, 2n-1, 2n-2. When N = (2n) + 1, the combination of the total number of the slot layers occupied by each parallel branch in each stator slot 11 is n, n-1, or the combination is n, n-1, n-2. N is a positive integer greater than or equal to 4. The total number of the slot layers of each parallel branch in each stator slot 11 is also a positive integer.

For example, in the above-mentioned application scenarios: when the number N of the slot layers in the stator slot 11 is 4, the combination of the total number of the slot layers occupied by each parallel branch in each stator slot 11 may be 2, 1; when the number N of the slot layers in the stator slot 11 is 6, the combination of the total number of the slot layers occupied by each parallel branch in each stator slot 11 may be 2, or the combination may be 2, 1; when the number N of the slot layers in the stator slot 11 is 7, the combination of the total number of the slot layers occupied by each parallel branch in each stator slot 11 may be 3, 2, or the combination may be 3, 2, 1.

By limiting the number N of the slot layers in the stator slot 11 and the corresponding total number of the slot layers occupied by each parallel branch in each stator slot, the number of types of wire profiles for the hair-pin coils 21 is reduced. This in turn decreases the number of manufacturing molds required for the flat-wire motor, thereby lowering the manufacturing cost and effectively enhancing the processing and manufacturing efficiency.

When the total number of the slot layers occupied by each parallel branch in the stator slot 11 is 1, the position of the 1 slot layer is either the first layer or the N-th layer of the stator slot 11. When the total number of the slot layers occupied by each parallel branch in the stator slot 11 is 2, these 2 slot layers are arranged as adjacent to each other in the stator slot 11, or these 2 slot layers are arranged as the first layer and the N-th layer of the stator slot 11 respectively. When the total number of the slot layers occupied by each parallel branch in the stator slot 11 is 3, two of these 3 slot layers are arranged as adjacent to each other, while the position of the remaining 1 slot layer is either the first layer or the N-th layer of the stator slot 11, and the remaining 1 slot layer is separated by four slot layers from the other two slot layers of the 3 slot layers. When the total number of the slot layers occupied by each parallel branch in the stator slot 11 is 4, the 4 slot layers are divided into two groups separated by four slot layers. Each group includes two slot layers adjacent to each other. The number of the types of the wire profiles for the hair-pin coils 21 may be further reduced through this limiting measure. In other words, the number of the manufacturing molds is further reduced, the cost is reduced, and the processing and manufacturing efficiency is increased.

In some embodiments, a pitch combination of the hair-pin coil 21 in each parallel branch is 8, 9, 11, 12, and 16. In some other embodiments, the pitch of each of the hair-pin coils 21 of each parallel branch in the same slot layer is 9. In yet another embodiment, the pitches of the hair-pin coils 21 of each parallel branch in the first slot layer or the N-th slot layer are 8, or the pitches are 8, 11. The pitch of the hair-pin coil 21 refers to the number of the stator slots spanned by the two straight segments 211 of the hair-pin coil 21.

The welding pitches between the hair-pin coils 21 in each parallel branch may either all be 9 or all be 11. In other words, in the same parallel branch, the number of stator slots spanned by two adjacent straight segments 211 of two adjacent hair-pin coils 21 may either all be 9 or all be 11.

In some embodiments, a lead-in end or a wire-entry end of each parallel branch is located at the N-th slot layer of the stator slot 11, while a lead-out end or a wire-exit end is located at the (N-1)-th slot layer. In some embodiments, both the lead-in end and the lead-out end of each parallel branch are located in the first slot layer and the N-th slot layer of the stator slot 11, thereby facilitating lead-out of the lead-in end and the lead-out end of the parallel branch. By centralizing the lead-out wire positions of the parallel branches, the axial space and the radial space occupied by the winding may be reduced, and the manufacturing difficulty level of the flat-wire motor is reduced.

For facilitating understanding, the following will provide a detailed illustration of the connection approach for the parallel branches of the present disclosure in conjunction with specific application scenarios.

In a specific application scenario, taking a 6-pole and 54-slot flat-wire motor as an example, the number of stator slots 11 in the stator core 10 is 54, the number of poles in the rotor is 6, the number of slots per pole per phase is 3, and the number N of slot layers of each stator slot 11 is 4. The stator windings are divided into the U phase winding, the V phase winding, and the W phase winding. The number of parallel branches configured for each phase winding is 3.

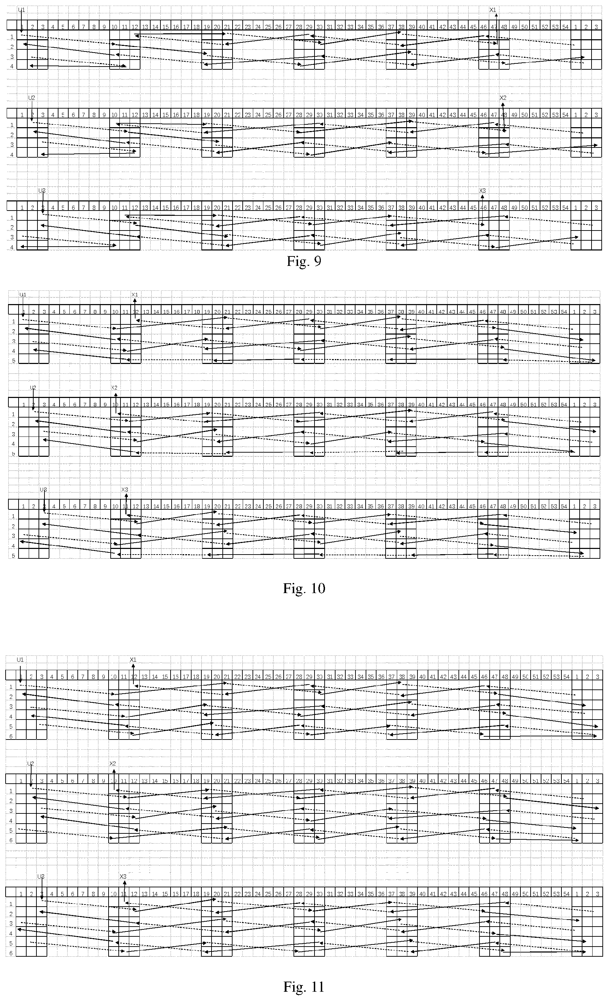

As illustrated in Fig. 8, Fig. 8 is a schematic diagram of a first type of winding configuration of the U phase winding in the 6-pole and 54-slot flat-wire motor according to an embodiment of the present disclosure, wherein the number of slot layers is 4. Fig. 9 is a schematic diagram of a second type of winding configuration of the U phase winding in the 6-pole and 54-slot flat-wire motor according to an embodiment of the present disclosure, wherein the number of slot layers is 4. In Fig. 8 and Fig. 9, solid lines represent the wiring approach for the wire-insertion ends, and dashed lines represent the wiring approach for the welding ends. U1, U2, and U3 may serve as either voltage lead-out wires or neutral point lead-out wires. X1, X2, and X3 may serve as either the voltage lead-out wires or the neutral point lead-out wires.

The following provides a detailed illustration of a first side-by-side branch, a second side-by-side branch and a third side-by-side branch of the U phase winding of the present embodiment in conjunction with Fig. 8 and Fig. 9, respectively.

The notation i(j) represents a j-th slot layer in an i-th slot. For example, 1(1) represents the first slot layer of the first slot, and 10(2) represents the second slot layer of the tenth slot.

There are 2 winding approaches for each of the first side-by-side branch, the second side-by-side branch, and the third side-by-side branch of the U phase winding.

As illustrated in Fig. 8, in the first type of winding approach, the slot numbers traversed by a series-connected first parallel branch of the U phase winding are: 1(1)-10(2)-21(1)-30(2)- 38(1)- 47(2)-2(3)- 11(4)- 19(3)- 28(4)- 39(3)- 48(4)- 2(4)-47(3)- 39(4)- 30(3)-19(4)-10(3)-1(2)-46(1)-38(2)-29(1)-21(2)-12(1).

The slot numbers traversed by a series-connected second parallel branch of the U phase winding are: 2(1)- 11(2)- 19(1)- 28(2)- 39(1)- 48(2)- 3(3)- 12(4)- 20(3)- 29(4)- 37(3)- 46(4)-3(4)-48(3)- 37(4)- 28(3)- 20(4)-11(3)-2(2)-47(1)-39(2)-30(1)-19(2)-10(1).

The slot numbers traversed by a series-connected third parallel branch of the U phase winding are: 3(1)→ 12(2)- 20(1)- 29(2)- 37(1)- 46(2)- 1(3)- 10(4)- 21(3)- 30(4)- 38(3)- 47(4)- 1(4)-46(3)-38(4)- 29(3)- 21(4)-12(3)-3(2)-48(1)-37(2)-28(1)-20(2)-11(1).

As illustrated in Fig. 9, in the second type of winding approach, the slot numbers traversed by the series-connected first parallel branch of the U phase winding are: 1(1)- 10(2)- 19(3)- 28(4)- 39(3)- 48(4)-2(3)- 11(4)→ 2(4)- 47(3)- 39(4)- 30(3)- 19(4)-10(3)- 1(2)→ 46(1)-38(2)→29(1)→21(2)→12(1)→21(1)→30(2)→38(1)→47(2).

The slot numbers traversed by the series-connected second parallel branch of the U phase winding are: 2(1)→ 11(2)- 20(3)- 29(4)- 37(3)- 46(4)- 3(3)- 12(4)- 3(4)- 48(3)- 37(4)- 28(3)-20(4)-11(3)- 2(2)- 47(1)-39(2)-30(1)-19(2)-10(1)- 19(1)-28(2)-39(1)-48(2).

The slot numbers traversed by the series-connected third parallel branch of the U phase winding are: 3(1)→ 12(2)- 21(3)- 30(4)- 38(3)- 47(4)→ 1(3)- 10(4)- 1(4)- 46(3)- 38(4)- 29(3)-21(4)-12(3)- 3(2)- 48(1)-37(2)-28(1)-20(2)-11(1)- 20(1)-29(2)-37(1)-46(2).

The U phase winding, the V phase winding, and the W phase winding are symmetrically and evenly distributed around the circumference of the stator core 10. The winding approaches for the V phase winding and the W phase winding are not further repeated here.

In another application scenario, still taking the 6-pole and 54-slot flat-wire motor as an example, the number of stator slots 11 in the stator core 10 is 54, the number of poles in the rotor is 6, the number of slots per pole per phase is 3, and the number N of slot layers of each stator slot 11 is 5. The stator windings are divided into the U phase winding, the V phase winding, and the W phase winding. The number of parallel branches configured for each phase winding is 3.

As illustrated in Fig. 10, Fig. 10 is a schematic diagram of a winding configuration of the U phase winding in the 6-pole and 54-slot flat-wire motor according to an embodiment of the present disclosure, wherein the number of slot layers is 5.

As illustrated in Fig. 10, the slot numbers traversed by the series-connected first parallel branch of the U phase winding are: 1(1)- 10(2)- 21(1)- 30(2)- 38(1)- 47(2)- 2(3)- 11(4)- 19(3)- 28(4)- 39(3)-48(4)-3(5)-48(5)- 37(5)- 28(5)-20(5)-11(5)- 2(4)-47(3)- 39(4)- 30(3)-19(4)-10(3)-1(2)-46(1)-38(2)-29(1)-21(2)-12(1).

The slot numbers traversed by the series-connected second parallel branch of the U phase winding are: 2(1)→ 11(2)- 19(1)- 28(2)- 39(1)- 48(2)- 3(3)- 12(4)- 20(3)→ 29(4)- 37(3)-46(4)-1(5)-46(5)-38(5)- 29(5)-21(5)-12(5)-3(4)-48(3)-37(4)-28(3)-20(4)→11(3)→2(2)→47(1)→39(2)→30(1)→19(2)→10(1).

The slot numbers traversed by the series-connected third parallel branch of the U phase winding are: 3(1)→ 12(2)- 20(1)- 29(2)- 37(1)- 46(2)- 1(3)- 10(4)- 21(3)→ 30(4)- 38(3)-47(4)→2(5)→47(5)→39(5)→30(5)→19(5)→10(5)→1(4)→46(3)→38(4)→29(3)→21(4)→12(3)→3(2)→48( 1)→37(2)→28(1)→20(2)→11(1).

In another application scenario, still taking the 6-pole and 54-slot flat-wire motor as an example, the number of stator slots 11 in the stator core 10 is 54, the number of poles in the rotor is 6, the number of slots per pole per phase is 3, and the number N of slot layers of each stator slot 11 is 6. The stator windings are divided into the U phase winding, the V phase winding, and the W phase winding. The number of parallel branches configured for each phase winding is 3.

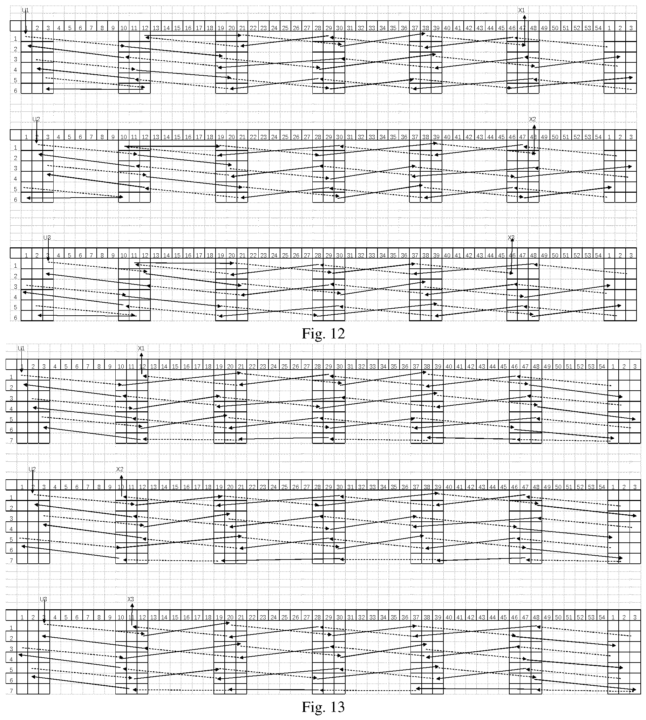

There are 2 winding approaches for each of the first side-by-side branch, the second side-by-side branch, and the third side-by-side branch of the U phase winding. As illustrated in Fig. 11 and Fig. 12, Fig. 11 is a schematic diagram of the first type of winding configuration of the U phase winding in the 6-pole and 54-slot flat-wire motor according to an embodiment of the present disclosure, wherein the number of slot layers is 6. Fig. 12 is a schematic diagram of the second type of winding configuration of the U phase winding in the 6-pole and 54-slot flat-wire motor according to an embodiment of the present disclosure, wherein the number of slot layers is 6.

As illustrated in Fig. 11, in the first type of winding approach, the slot numbers traversed by the series-connected first parallel branch of the U phase winding are: 1(1)- 10(2)- 21(1)- 30(2)- 38(1)- 47(2)-2(3)- 11(4)- 19(3)- 28(4)- 39(3)- 48(4)-3(5)-12(6)- 20(5)- 29(6)-37(5)-46(6)-3(6)-48(5)-37(6)-28(5)-20(6)-11(5)- 2(4)-47(3)- 39(4)- 30(3)-19(4)-10(3)-1(2)-46(1)-38(2)-29(1)-21(2)-12(1).

The slot numbers traversed by the series-connected second parallel branch of the U phase winding are: 2(1)- 11(2)- 19(1)- 28(2)- 39(1)- 48(2)- 3(3)- 12(4)- 20(3)- 29(4)- 37(3)- 46(4)-1(5)-10(6)- 21(5)- 30(6)- 38(5)-47(6)-1(6)-46(5)- 38(6)- 29(5)- 21(6)- 12(5)- 3(4)-48(3)-37(4)- 28(3)- 20(4)→11(3)→2(2)→47(1)→39(2)→30(1)→19(2)→10(1).

The slot numbers traversed by the series-connected third parallel branch of the U phase winding are: 3(1)→ 12(2)→ 20(1)- 29(2)- 37(1)- 46(2)- 1(3)- 10(4)- 21(3)- 30(4)→ 38(3)- 47(4)-2(5)-11(6)- 19(5)- 28(6)- 39(5)-48(6)-2(6)-47(5)-39(6)-30(5)-19(6)-10(5)- 1(4)-46(3)-38(4)- 29(3)- 21(4)→12(3)→3(2)→48(1)→37(2)→28(1)→20(2)→11(1).

As illustrated in Fig. 11, in the second type of winding approach, the slot numbers traversed by the series-connected first parallel branch of the U phase winding are: 1(1)- 10(2)- 19(3)- 28(4)- 39(3)- 48(4)-2(3)- 11(4)- 20(5)- 29(6)- 37(5)- 46(6)- 3(5)-12(6)- 3(6)- 48(5)-37(6)-28(5)-20(6)-11(5)-2(4)-47(3)- 39(4)- 30(3)- 19(4)-10(3)- 1(2)- 46(1)-38(2)→29(1)→21(2)→12(1)→21(1)→30(2)→38(1)→47(2).

The slot numbers traversed by the series-connected second parallel branch of the U phase winding are: 2(1)- 11(2)- 20(3)- 29(4)- 37(3)- 46(4)- 3(3)- 12(4)- 21(5)- 30(6)→ 38(5)- 47(6)-1(5)-10(6)- 1(6)- 46(5)- 38(6)-29(5)-21(6)-12(5)-3(4)-48(3)- 37(4)- 28(3)- 20(4)-11(3)-2(2)- 47(1)- 39(2)-30(1)-19(2)-10(1)-19(1)-28(2)-39(1)-48(2).

The slot numbers traversed by a series-connected third parallel branch of the U phase winding are: 3(1)-12(2)- 21(3)- 30(4)- 38(3)- 47(4)- 1(3)- 10(4)- 19(5)- 28(6)- 39(5)- 48(6)- 2(5)-11(6)-2(6)- 47(5)- 39(6)-30(5)-19(6)-10(5)-1(4)-46(3)- 38(4)- 29(3)- 21(4)-12(3)- 3(2)- 48(1)-37(2)-28(1)-20(2)-11(1)-20(1)-29(2)-37(1)-46(2).

In another application scenario, still taking the 6-pole and 54-slot flat-wire motor as an example, the number of stator slots 11 in the stator core 10 is 54, the number of poles in the rotor is 6, the number of slots per pole per phase is 3, and the number N of slot layers of each stator slot 11 is 7. The stator windings are divided into the U phase winding, the V phase winding, and the W phase winding. The number of parallel branches configured for each phase winding is 3.

As illustrated in Fig. 13, Fig. 13 is a schematic diagram of a winding configuration of the U phase winding in the 6-pole and 54-slot flat-wire motor according to an embodiment of the present disclosure, wherein the number of slot layers is 7.

As illustrated in Fig. 13, the slot numbers traversed by the series-connected first parallel branch of the U phase winding are: 1(1)- 10(2)- 21(1)- 30(2)- 38(1)- 47(2)- 2(3)- 11(4)- 19(3)- 28(4)- 39(3)-48(4)-3(5)-12(6)- 20(5)- 29(6)-37(5)→46(6)→1(7)→46(7)→38(7)→29(7)→21(7)→12(7)→3(6)→48(5)→37(6)→28(5)→20(6)→11(5)→ 2(4)-47(3)- 39(4)- 30(3)- 19(4)-10(3)-1(2)-46(1)-38(2)-29(1)-21(2)-12(1).

The slot numbers traversed by the series-connected second parallel branch of the U phase winding are: 2(1)- 11(2)→ 19(1)- 28(2)- 39(1)- 48(2)- 3(3)- 12(4)- 20(3)- 29(4)- 37(3)- 46(4)-1(5)-10(6)- 21(5)- 30(6)-38(5)→47(6)→2(7)→47(7)→39(7)→39(7)→30(7)→19(7)→10(7)→1(6)→46(5)→ 38(6)- 29(5)-21(6)-12(5)- 3(4)-48(3)- 37(4)- 28(3)- 20(4)-11(3)-2(2)-47(1)-39(2)-30(1)-19(2)-10(1).

The slot numbers traversed by the series-connected third parallel branch of the U phase winding are:3(1)- 12(2)- 20(1)- 29(2)- 37(1)- 46(2)- 1(3)- 10(4)- 21(3)- 30(4)- 38(3)- 47(4)-2(5)-11(6)- 19(5)- 28(6)-39(5)-48(6)-3(7)-48(7)-37(7)-28(7)-20(7)-11(7)-2(6)-47(5)-39(6)-30(5)-19(6)-10(5)-1(4)-46(3)- 38(4)- 29(3)- 21(4)-12(3)-3(2)-48(1)-37(2)-28(1)-20(2)-11(1).

In another application scenario, still taking the 6-pole and 54-slot flat-wire motor as an example, the number of stator slots 11 in the stator core 10 is 54, the number of poles in the rotor is 6, the number of slots per pole per phase is 3, and the number N of slot layers of each stator slot 11 is 8. The stator windings are divided into the U phase winding, the V phase winding, and the W phase winding. The number of parallel branches configured for each phase winding is 3.

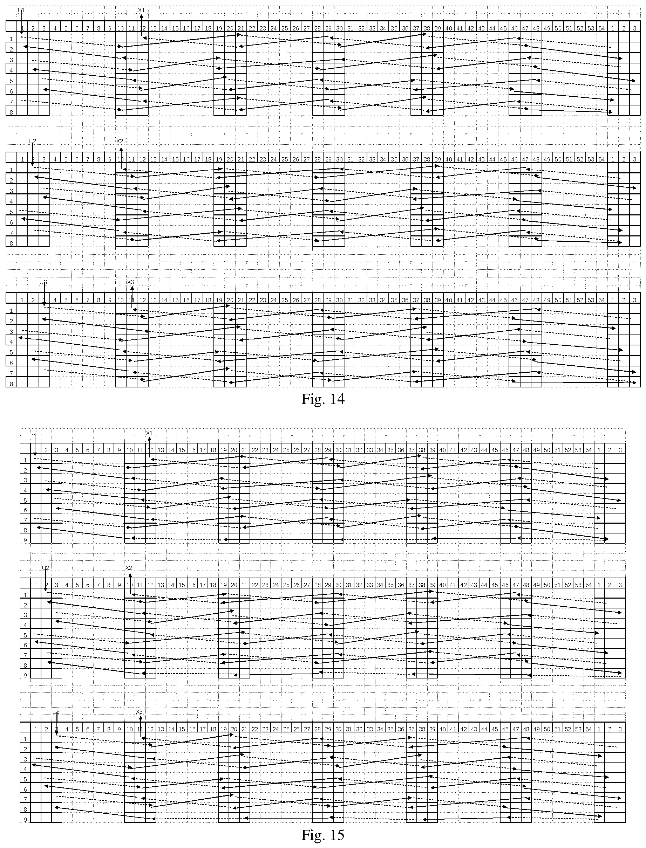

As illustrated in Fig. 14, Fig. 14 is a schematic diagram of a winding configuration of the U phase winding in the 6-pole and 54-slot flat-wire motor according to an embodiment of the present disclosure, wherein the number of slot layers is 8.

As illustrated in Fig. 14, the slot numbers traversed by the series-connected first parallel branch of the U phase winding are: 1(1)- 10(2)- 21(1)- 30(2)- 38(1)- 47(2)- 2(3)- 11(4)- 19(3)- 28(4)- 39(3)-48(4)-3(5)-12(6)- 20(5)- 29(6)-37(5)→46(6)→1(7)→10(8)→21(7)→30(8)→38(7)→47(8)→1(8)→46(7)→38(8)→29(7)→21(8)→12(7)→3( 6)-48(5)-37(6)-28(5)-20(6)-11(5)-2(4)-47(3)-39(4)-30(3)→19(4)→10(3)→1(2)→46(1)→38(2)→29(1)→21(2)→12(1).

The slot numbers traversed by the series-connected second parallel branch of the U phase winding are: 2(1)- 11(2)- 19(1)- 28(2)- 39(1)- 48(2)- 3(3)- 12(4)- 20(3)- 29(4)- 37(3)- 46(4)-1(5)-10(6)- 21(5)- 30(6)-38(5)→47(6)→2(7)→11(8)→19(7)→28(8)→39(7)→48(8)→2(8)→47(7)→39(8)→30(7)→19(8)→10(7)→1( 6)-46(5)- 38(6)- 29(5)- 21(6)-12(5)- 3(4)-48(3)- 37(4)- 28(3)-20(4)→11(3)→2(2)→47(1)→39(2)→30(1)→19(2)→10(1).

The slot numbers traversed by the series-connected third parallel branch of the U phase winding are: 3(1)→ 12(2)→ 20(1)- 29(2)- 37(1)- 46(2)- 1(3)- 10(4)- 21(3)- 30(4)→ 38(3)- 47(4)-2(5)-11(6)- 19(5)- 28(6)-39(5)→48(6)→3(7)→12(8)→20(7)→29(8)→37(7)→46(8)→3(8)→48(7)→37(8)→28(7)→20(8)→11(7)→2( 6)-47(5)-39(6)-30(5)-19(6)-10(5)- 1(4)-46(3)- 38(4)- 29(3)-21(4)→12(3)→3(2)→48(1)→37(2)→28(1)→20(2)→11(1).

In another application scenario, still taking the 6-pole and 54-slot flat-wire motor as an example, the number of stator slots 11 in the stator core 10 is 54, the number of poles in the rotor is 6, the number of slots per pole per phase is 3, and the number N of slot layers of each stator slot 11 is 9. The stator windings are divided into the U phase winding, the V phase winding, and the W phase winding. The number of parallel branches configured for each phase winding is 3.

As illustrated in Fig. 15, Fig. 15 is a schematic diagram of a winding configuration of the U phase winding in the 6-pole and 54-slot flat-wire motor according to an embodiment of the present disclosure, wherein the number of slot layers is 9.

As illustrated in Fig. 15, the slot numbers traversed by the series-connected first parallel branch of the U phase winding are: 1(1)-10(2)-21(1)-30(2)-38(1)-47(2)-2(3)-11(4)-19(3)-28(4)-39(3)-48(4)- 3(5)- 12(6)-20(5)-29(6)-37(5)-46(6)-1(7)-10(8)-21(7)-30(8)-38(7)-47(8)-2(9)-47(9)-39(9)-30(9)-19 (9)→10(9)→1(8)→46(7)→38(8)→29(7)→21(8)→12(7)→3(6)→48(5)→37(6)→28(5)→20(6)→11(5)→2(4) →47(3)→39(4)→30(3)→19(4)→10(3)→1(2)→46(1)→38(2)→29(1)→21(2)→12(1).

The slot numbers traversed by the series-connected second parallel branch of the U phase winding are: 2(1)→11(2)→19(1)→28(2)→39(1)→48(2)→3(3)→12(4)→20(3)→29(4)→37(3)→46(4)→1(5)→10(6)→21( 5)-30(6)-38(5)-47(6)-2(7)-11(8)-19(7)-26(8)-39(7)-48(8)-3(9)-46(9)-37(9)-28(9)-20(9) - 11(9)-2(8)-47(7)-39(8)-30(7)-19(8)-10(7)-1(6)-46(5)-38(6)-29(5)-21(6)-12(5)-3(4)-4 8(3)→37(4)→28(3)→20(4)→11(3)→2(2)→47(1)→39(2)→30(1)→19(2)→10(1).

The slot numbers traversed by the series-connected third parallel branch of the U phase winding are:3(1)-12(2)-20(1)-29(2)-37(1)-46(2)-1(3)-10(4)-21(3)-30(4)-38(3)-47(4)-2(5)-11(6)-19(5)-28(6)-39(5)-48(6)-3(7)-12(8)-20(7)-29(8)-37(7)-46(8)-1(9)-46(9)-38(9)-29(9)-21 (9)-12(9)-3(8)-48(7)-37(8)-28(7)-20(8)-11(7)-2(6)-47(5)-39(6)-30(5)-19(6)-10(5)-1(4) -46(3)-38(4)-29(3)-21(4)-12(3)-3(2)-48(1)-37(2)-28(1)-20(2)-11(1).

In another application scenario, still taking the 6-pole and 54-slot flat-wire motor as an example, the number of stator slots 11 in the stator core 10 is 54, the number of poles in the rotor is 6, the number of slots per pole per phase is 3, and the number N of slot layers of each stator slot 11 is 10. The stator windings are divided into the U phase winding, the V phase winding, and the W phase winding. The number of parallel branches configured for each phase winding is 3.

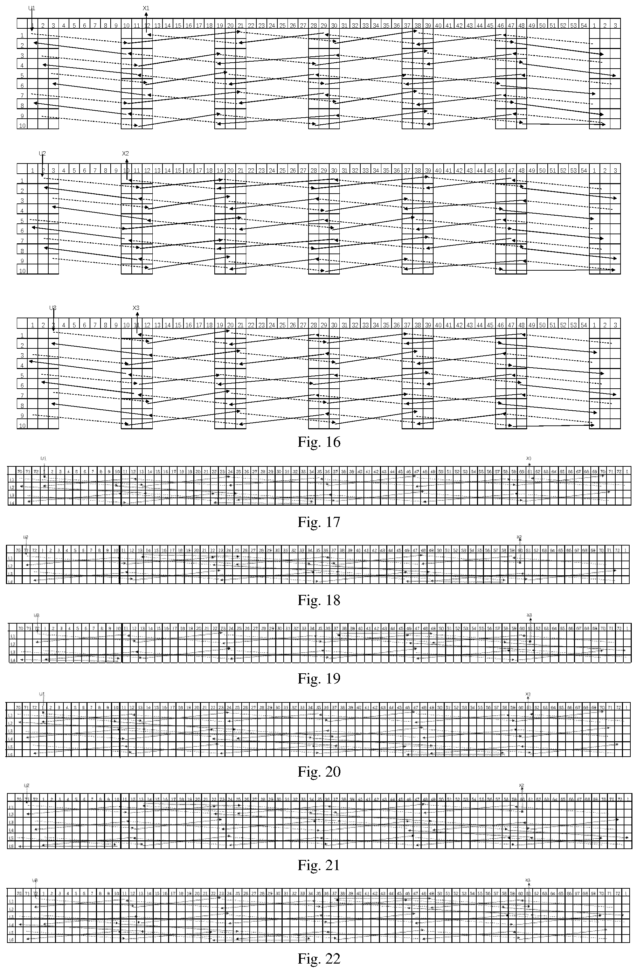

As illustrated in Fig. 16, Fig. 16 is a schematic diagram of a winding configuration of the U phase winding in the 6-pole and 54-slot flat-wire motor according to an embodiment of the present disclosure, wherein the number of slot layers is 10.

As illustrated in Fig. 16, the slot numbers traversed by the series-connected first parallel branch of the U phase winding are: 1(1)→10(2)→21(1)→30(2)→38(1)→47(2)→2(3)→11(4)→19(3)→28(4)→39(3)→48(4)→3(5)→12(6)→20( 5)→29(6)→37(5)→46(6)→1(7)→10(8)→21(7)→30(8)→38(7)→47(8)→2(9)→11(10)→19(9)→28(10)→39( 9)-48(10)-2(10)-47(9)-39(10)-30(9)-19(10)-10(9)-1(8)-46(7)-38(8)-29(7)-21(8)-12(7)-3 (6)→48(5)→37(6)→28(5)→20(6)→11(5)→2(4)→47(3)→39(4)→30(3)→19(4)→10(3)→1(2)→46(1)→38(2) →28(1)→21(2)→12(1).

The slot numbers traversed by the series-connected second parallel branch of the U phase winding are:2(1)-11(2)-19(1)-28(2)-39(1)-48(2)-3(3)-12(4)-20(3)-29(4)-37(3)-46(4)-1(5)-10(6)-21(5)→30(6)→38(5)→47(6)→2(7)→11(8)→19(7)→26(8)→39(7)→48(8)→3(9)→12(10)→20(9)→29(10)→ 37(9)-46(10)-3(10)-48(9)-37(10)-28(9)-20(10)-11(9)-2(8)-47(7)-39(8)-30(7)-19(8)-10(7) →1(6)→46(5)→38(6)→29(5)→21(6)→12(5)→3(4)→48(3)→37(4)→28(3)→20(4)→11(3)→2(2)→47(1)→3 9(2)→30(1)→19(2)→10(1).

The slot numbers traversed by a series-connected third parallel branch of the U phase winding are: 3(1)→12(2)→20(1)→29(2)→37(1)→46(2)→1(3)→10(4)→21(3)→30(4)→38(3)→47(4)→2(5)→11(6)→19( 5)→28(6)→39(5)→48(6)→3(7)→12(8)→20(7)→29(8)→37(7)→46(8)→1(9)→10(10)→21(9)→30(10)→36( 9)-47(10)-1(10)-46(9)-38(10)-29(9)-21(10)-12(9)-3(8)-48(7)-37(8)-28(7)-20(8)-11(7)-2 (6)→47(5)→39(6)→30(5)→19(6)→10(5)→1(4)→46(3)→38(4)→29(3)→21(4)→12(3)→3(2)→48(1)→37(2) →28(1)→20(2)→11(1).

As illustrated in Fig. 3 and Fig. 4, in the present disclosure, the plurality of hair-pin coils 21 of each parallel branch include a long-pitch hair-pin coil, a full-pitch hair-pin coil and a short-pitch hair-pin coil. The pitch of the long-pitch hair-pin coil is s/(2p) +a. The pitch of the full-pitch hair-pin coil is s/(2p). The pitch of the short-pitch hair-pin coil is s/(2p) +a-4. a is an integer greater than or equal to 2 and less than or equal to 4.

In each parallel branch, a first leg 211 of the short-pitch hair-pin coil is located in the k-th slot layer, a second leg 212 of the short-pitch hair-pin coil is located in the (k+1)-th slot layer, the first leg 211 of the long-pitch hair-pin coil is located in the (k+1)-th slot layer, the second leg 212 of the long-pitch hair-pin coil is located in the (k+2)-th slot layer, the first leg 211 and the second leg 212 of the full-pitch hair-pin coil are both located in either the first slot layer or in the n-th slot layer. Here, k is an odd number greater than or equal to 1 and less than or equal to n.

The voltage lead-out wires of the p parallel branches of each phase winding are located in s stator slots, and are at the same slot layer or adjacent slot layers of different stator slots. The neutral point lead-out wires of the p parallel branches of each phase winding are located in s stator slots, and are at the same slot layer or adjacent slot layers of different stator slots. In this way, the structures of the windings are simplified.

All the lead-out wires and neutral points of the three phase windings are concentrated in the same slot layer or adjacent slot layers of different stator slots 11. By centralizing the positions of the lead-out wires the neutral points of the parallel branches, the axial space and the radial space occupied by the winding may be reduced, the manufacturing difficulty level of the flat-wire motor is reduced.

Since the p parallel branches of each phase winding are rotationally symmetric along the circumferential direction of the stator core 10, the voltage lead-out wires of the p parallel branches of the same phase winding are also rotationally symmetric along the circumferential direction of the stator core 10, and the neutral point lead-out wires of the p parallel branches of the same phase winding are also rotationally symmetric along the circumferential direction of the stator core 10. Furthermore, the voltage lead-out wires and the neutral point lead-out wires are all located at the same slot layer. For example, the voltage lead-out wires and the neutral point lead-out wires are all located at the first slot layer or at the n-th slot layer.

In the present embodiment, in each phase winding, the voltage lead-out wires and the neutral points of the p parallel branches are all rotationally symmetric along the circumferential direction of the stator core 10. In this way, the generation of circulating currents may be avoided.

In some embodiments, the welding pitches between the hair-pin coils 21 in each parallel branch may all be s/(2p). In other words, the welding pitches between the hair-pin coils 21 of each parallel branch are the same as the pitch of the full-pitch hair-pin coil. In some embodiments, the welding pitches between the hair-pin coils 21 in the parallel branches may also differ from the pitch of the full-pitch hair-pin coil.

In some embodiments, a=3, the pitch of the long-pitch hair-pin coil is s/(2p) +3, the pitch of the full-pitch hair-pin coil is s/(2p), and the pitch of the short-pitch hair-pin coil is s/(2p) -1. In each parallel branch, hair-pin coils with all these three types of pitches coexist. The hair-pin coils of each parallel branch traverse through n slot layers in different stator slots 11, such that the p parallel branches may eliminate electrical potential phase differences caused by differences of slot layer positions.

In the above-mentioned application scenario, the pitch of the short-pitch hair-pin coil may be 11, the pitch of the full-pitch hair-pin coil may be 12, and the pitch of the long-pitch hair-pin coil may be 15.

In the above-mentioned application scenario, when k=1, the hair-pin coils adopted by the parallel branch between the first slot layer and the second slot layer are short-pitch hair-pin coils, the hair-pin coils adopted by the parallel branch between the second slot layer and the third slot layer are long-pitch hair-pin coils. In the same manner, it may be deduced that, the hair-pin coils adopted by the parallel branch between the third slot layer and the fourth slot layer are short-pitch hair-pin coils, the hair-pin coils adopted by the parallel branch between the fourth slot layer and the fifth slot layer are long-pitch hair-pin coils, which would not be repeated further. The full-pitch hair-pin coils, when present in the same slot layer, would only present in the first slot layer or in the n-th slot layer. The winding approach for each phase winding may be wave winding or lap winding.

As illustrated in Fig. 17 to Fig. 19, Fig. 17 is a schematic diagram of a winding configuration of a first parallel branch of the U phase winding in a flat-wire motor according to an embodiment of the present disclosure, wherein the flat-wire motor includes 6 poles and 72 slots, the number of slot layers is 4, and a is 3. Fig. 18 is a schematic diagram of a winding configuration of a second parallel branch of the U phase winding in the flat-wire motor in Fig. 17. Fig. 19 is a schematic diagram of a winding configuration of a third parallel branch of the U phase winding in the flat-wire motor in Fig. 17.

In Fig. 8 and Fig. 9, solid lines represent the wiring approach for the wire-insertion ends, and dashed lines represent the wiring approach for the welding ends. U1, U2, and U3 may serve as either the voltage lead-out wires or the neutral point lead-out wires. X1, X2, and X3 may serve as either the voltage lead-out wires or the neutral point lead-out wires.

In the above-mentioned application scenario, m=3, the number s of stator slots is 72, the number p of pole pairs of the rotor is 3, the number q of slots per pole per phase is 4, the number n of slot layers of the stator slot 11 is 4, the pitch of the long-pitch hair-pin coil is 15, the pitch of the full-pitch hair-pin coil is 12, the pitch of the short-pitch hair-pin coil is 11, the welding pitch between adjacent hair-pin coils of the parallel branch is 12, then the hair-pin coils adopted by the parallel branch between the first slot layer and the second slot layer are short-pitch hair-pin coils, the hair-pin coils adopted by the parallel branch between the second slot layer and the third slot layer are long-pitch hair-pin coils, the hair-pin coils adopted by the parallel branch between the third slot layer and the fourth slot layer are short-pitch hair-pin coils. The full-pitch hair-pin coil presents in the same slot layer, and would only present in the first slot layer or in the fourth slot layer. Therefore, when the stator winding 20 of the present embodiment is adopted, only 5 types of hair-pin coils 21 are required. The stator winding 20 of the present embodiment includes three phase windings with a phase difference of 120 electrical degrees.

The following provides a detailed illustration of the first side-by-side branch, the second side-by-side branch and the third side-by-side branch of the U phase winding of the present embodiment in conjunction with Fig. 17, Fig. 18 and Fig. 19, respectively.

The notation i(j) represents the j-th slot layer in the i-th slot. For example, 1(1) represents the first slot layer of the first slot, and 7(2) represents the second slot layer of the seventh slot.

As illustrated in Fig. 17, the first parallel branch of the U phase winding is fed into the winding at a voltage lead-out wire position U1, and exits the winding at a neutral point lead-out wire position X1. The slot numbers traversed by this series-connected first parallel branch are: 1(1)→13(2)→24(1)→36(2)→47(1)→59(2)→70(1)→10(2)→25(3)→37(4)→48(3)→60(4)→71(3)→11(4)→2 2(3)→34(4)→22(4)→10(3)→71(4)→59(3)→48(4)→36(3)→25(4)→13(3)→70(2)→58(1)→47(2)→35(1)→2 4(2)-12(1)-1(2)-61(1).

As illustrated in Fig. 18, the second parallel branch of the U phase winding is fed into the winding at a voltage lead-out wire position U2, and exits the winding at a neutral point lead-out wire position X2. The slot numbers traversed by this series-connected second parallel branch are: 71(1)→11(2)→22(1)→34(2)→49(3)→61(4)→72(3)→12(4)→23(3)→35(4)→46(3)→58(4)→46(4)→34(3)→ 23(4)→11(3)→72(4)→60(3)→49(4)→37(3)→22(2)→10(1)→71(2)→59(1)→48(2)→36(1)→25(2)→13(1)→ 25(1)-37(2)-48(1)-60(2).

As illustrated in Fig. 19, the third parallel branch of the U phase winding is fed into the winding at a voltage lead-out wire position U3, and exits the winding at a neutral point lead-out wire position X3. The slot numbers traversed by this series-connected third parallel branch are: 72(1)→12(2)→23(1)→35(2)→46(1)→58(2)→1(3)→13(4)→24(3)→36(4)→47(3)→59(4)→70(3)→10(4)→7 0(4)→58(3)→47(4)→35(3)→24(4)→12(3)→1(4)→61(3)→46(2)→34(1)→23(2)→11(1)→72(2)→60(1)→49 (2)→37(1)→49(1)→61(2).

The serial numbers of the starting slots and the ending slots corresponding to the 3 parallel branches of the U phase winding are distributed as follows: U1 corresponds to 1(1), X1 corresponds to 61(1); U2 corresponds to 71(1), X2 corresponds to 60(2); U3 corresponds to 72(1), X3 corresponds to 61(2). U1, U2, and U3 are connected in parallel. X1, X2, and X3 are connected in parallel. U1, U2, U3 and X1, X2, X3 are ultimately connected through a bus bar to form the finished U phase winding.

The U phase winding, the V phase winding, and the W phase winding are symmetrically and evenly distributed around the circumference of the stator core 10. In the present embodiment, the V phase winding and the W phase winding may be obtained by rotating the U phase winding along the circumferential direction of the stator core 10 across a plurality of stator slots 11. The winding approaches for the V phase winding and the W phase winding are not further repeated here.

Based on the above-mentioned application scenario, i.e., m=3, the number s of stator slots is 72, the number p of pole pairs of the rotor is 3, the number q of slots per pole per phase is 4. When the number n of slot layers of the stator slot 11 is 6, the pitch of the long-pitch hair-pin coil is 15, the pitch of the full-pitch hair-pin coil is 12, the pitch of the short-pitch hair-pin coil is 11, the welding pitch between adjacent hair-pin coils of the parallel branch is 12, thus the hair-pin coils adopted by the parallel branch between the first slot layer and the second slot layer are the short-pitch hair-pin coils, the hair-pin coils adopted by the parallel branch between the second slot layer and the third slot layer are the long-pitch hair-pin coils, the hair-pin coils adopted by the parallel branch between the third slot layer and the fourth slot layer are the short-pitch hair-pin coils, the hair-pin coils adopted by the parallel branch between the fourth slot layer and the fifth slot layer are the long-pitch hair-pin coils, the hair-pin coils adopted by the parallel branch between the fifth slot layer and the sixth slot layer are short-pitch hair-pin coils. The full-pitch hair-pin coil presents in the same slot layer, and would only present in the first slot layer or in the sixth slot layer. Therefore, when the stator winding 20 of the present embodiment is adopted, only 7 types of hair-pin coils 21 are required. The stator winding 20 of the present embodiment includes three phase windings with a phase difference of 120 electrical degrees.

As illustrated in Fig. 20, the first parallel branch of the U phase winding is fed into the winding at the voltage lead-out wire position U1, and exits the winding at the neutral point lead-out wire position X1. The slot numbers traversed by this series-connected first parallel branch are: 1(1)→13(2)→24(1)→36(2)→47(1)→59(2)→70(1)→10(2)→25(3)→37(4)→48(3)→60(4)→71(3)→11(4)→2 2(3)→34(4)→49(5)→61(6)→72(5)→12(6)→23(5)→35(6)→46(5)→58(6)→46(6)→34(5)→23(6)→11(5)→7 2(6)→60(5)→49(6)→37(5)→22(4)→10(3)→71(4)→59(3)→48(4)→36(3)→25(4)→13(3)→70(2)→58(1)→4 7(2)-35(1)-24(2)-12(1)-1(2)-61(1).

As illustrated in Fig. 21, the second parallel branch of the U phase winding is fed into the winding at the voltage lead-out wire position U2, and exits the winding at the neutral point lead-out wire position X2. The slot numbers traversed by this series-connected second parallel branch are: 71(1)→11(2)→22(1)→34(2)→49(3)→61(4)→72(3)→12(4)→23(3)→35(4)→46(3)→58(4)→1(5)→13(6)→2 4(5)→36(6)→47(5)→59(6)→70(5)→10(6)→70(6)→58(5)→47(6)→35(5)→24(6)→12(5)→1(6)→61(5)→46 (4)→34(3)→23(4)→11(3)→72(4)→60(3)→49(4)→37(3)→22(2)→10(1)→71(2)→59(1)→36(1)→25(2)→13 (1)→25(1)→37(2)→48(1)→60(2).

As illustrated in Fig. 22, the third parallel branch of the U phase winding is fed into the winding at the voltage lead-out wire position U3, and exits the winding at the neutral point lead-out wire position X3. The slot numbers traversed by this series-connected third parallel branch are: (1)→12(2)→23(1)→35(2)→46(1)→58(2)→1(3)→13(4)→24(3)→36(4)→47(3)→59(4)→70(3)→10(4)→25( 5)→37(6)→48(5)→60(6)→71(5)→11(6)→22(5)→34(6)→22(6)→10(5)→71(6)→59(5)→48(6)→36(5)→25( 6)→13(5)→70(4)→58(3)→47(4)→35(3)→24(4)→12(3)→1(4)→61(3)→46(2)→34(1)→23(2)→11(1)→72(2 )→60(1)→49(2)→37(1)→49(1)→61(2).

The serial numbers of the starting slots and the ending slots corresponding to the 3 parallel branches of the U phase winding are distributed as follows: U1 corresponds to 1(1), X1 corresponds to 61(1); U2 corresponds to 71(1), X2 corresponds to 60(2); U3 corresponds to 72(1), X3 corresponds to 61(2). U1, U2, and U3 are connected in parallel. X1, X2, and X3 are connected in parallel. U1, U2, U3 and X1, X2, X3 are ultimately connected through the bus bar to form the finished U phase winding.

Based on the above-mentioned application scenario, i.e., m=3, the number s of stator slots is 72, the number p of pole pairs of the rotor is 3, the number q of slots per pole per phase is 4, when the number n of slot layers of the stator slot 11 is 8, the pitch of the long-pitch hair-pin coil is 15, the pitch of the full-pitch hair-pin coil is 12, the pitch of the short-pitch hair-pin coil is 11, Therefore, when the stator winding 20 of the present embodiment is adopted, only 9 types of hair-pin coils 21 are required.

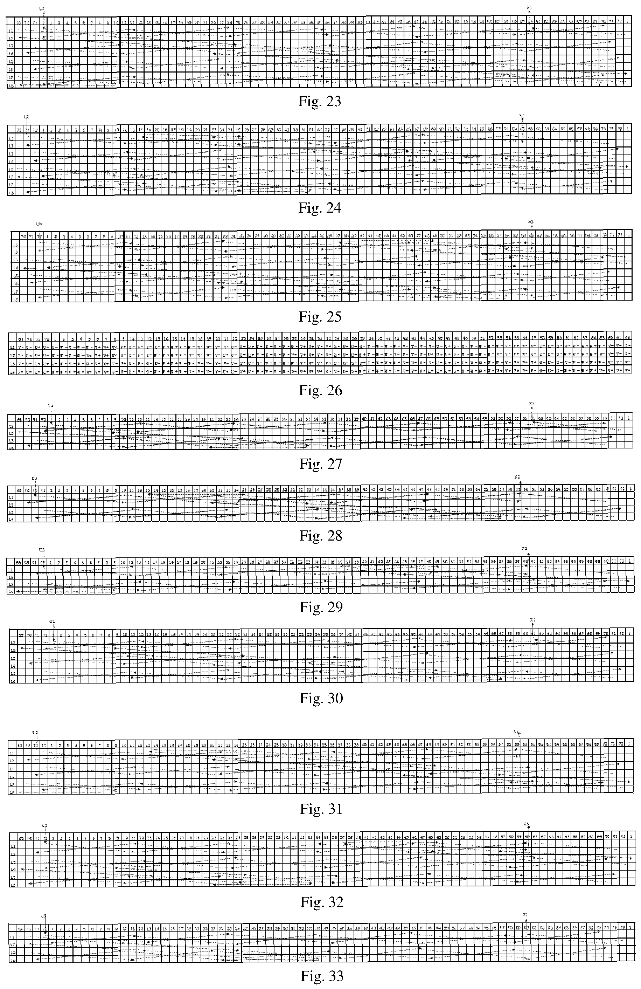

As illustrated in Fig. 23, the first parallel branch of the U phase winding is fed into the winding at the voltage lead-out wire position U1, and exits the winding at the neutral point lead-out wire position X1. The slot numbers traversed by this series-connected first parallel branch are: 1(1)→13(2)→24(1)→36(2)→47(1)→59(2)→70(1)→10(2)→25(3)→37(4)→48(3)→60(4)→71(3)→11(4)→2 2(3)-34(4)-49(5)-61(6)-72(5)-12(6)-23(5)-35(6)-46(5)-58(6)-1(7)-13(8)-24(7)-36(8)-47 (7)→59(8)→70(7)→10(8)→70(8)→58(7)→47(8)→35(7)→24(8)→12(7)→1(8)→61(7)→46(6)→34(5)→23( 6)→11(5)→72(6)→60(5)→49(6)→37(5)→22(4)→10(3)→71(4)→59(3)→48(4)→36(3)→25(4)→13(3)→70( 2)-58(1)-47(2)-35(1)-24(2)-12(1)-1(2)-61(1).

As illustrated in Fig. 24, the second parallel branch of the U phase winding is fed into the winding at the voltage lead-out wire position U2, and exits the winding at the neutral point lead-out wire position X2. The slot numbers traversed by this series-connected second parallel branch are: 71(1)→11(2)→22(1)→34(2)→49(3)→61(4)→72(3)→12(4)→23(3)→35(4)→46(3)→58(4)→1(5)→13(6)→2 4(5)-36(6)-47(5)-59(6)-70(5)-10(6)-25(7)-37(8)-48(7)-60(8)-71(7)-11(8)-22(7)-34(8)-2 2(8)→10(7)→71(8)→59(7)→48(8)→36(7)→25(8)→13(7)→70(6)→58(5)→47(6)→35(5)→24(6)→12(5)→1 (6)→61(5)→46(4)→34(3)→23(4)→11(3)→72(4)→60(3)→49(4)→37(3)→22(2)→10(1)→71(2)→59(1)→36 (1)→25(2)→13(1)→25(1)→37(2)→48(1)→60(2).

As illustrated in Fig. 25, the third parallel branch of the U phase winding is fed into the winding at the voltage lead-out wire position U3, and exits the winding at the neutral point lead-out wire position X3. The slot numbers traversed by this series-connected third parallel branch are: 72(1)→12(2)→23(1)→35(2)→46(1)→58(2)→1(3)→13(4)→24(3)→36(4)→47(3)→59(4)→70(3)→10(4)→2 5(5)→37(6)→48(5)→60(6)→71(5)→11(6)→22(5)→34(6)→49(7)→61(8)→72(7)→12(8)→23(7)→35(8)→4 6(7)-58(8)-46(8)-34(7)-23(8)-11(7)-72(8)-60(7)-49(8)-37(7)-22(6)-10(5)-71(6)-59(5)-4 8(6)→36(5)→25(6)→13(5)→70(4)→58(3)→47(4)→35(3)→24(4)→12(3)→1(4)→61(3)→46(2)→34(1)→23 (2)→11(1)→72(2)→60(1)→49(2)→37(1)→49(1)→61(2).

The series numbers of the starting slots and the ending slots corresponding to the three parallel branches of the U-phase winding are distributed as follows: U1 corresponds to 1(1), X1 corresponds to 61(1); U2 corresponds to 71(1), X2 corresponds to 60(2); U3 corresponds to 72(1), X3 corresponds to 61(2). U1, U2, and U3 are connected in parallel. X1, X2, and X3 are connected in parallel. U1, U2, U3 and X1, X2, X3 are ultimately connected through the bus bar to form the finished U phase winding.

In another application scenario, a=4, then the pitch of the long-pitch hair-pin coil is s/(2p)+4, the pitch of the full-pitch hair-pin coil is s/(2p), the pitch of the short-pitch hair-pin coil is also s/(2p). In other words, the short-pitch hair-pin coil may also serve as the full-pitch hair-pin coil. The first leg 211 of this short-pitch hair-pin coil (the full-pitch hair-pin coil) is located at the k-th slot layer, and the second leg 212 of the short-pitch hair-pin coil is located at the (k+1)-th slot layer.

In the above-mentioned application scenario, the number s of stator slots is 6pq, the number n of slot layers of the stator slot 11 is an even number, a=4. Therefore, in the present embodiment, the short-pitch hair-pin coil is changed to the full-pitch hair-pin coil. As illustrated in Fig. 26, in a phase spread distribution of the three phase windings, polarity distribution of all odd-numbered layers is the same, and the polarity distribution of all even-numbered layers is also the same, but is offset by one stator slot relative to the polarity distribution of all the odd-numbered layers.

In the present disclosure, the hair-pin coils of the parallel branches of each phase winding traverse through n slot layers in different stator slots 11, and the winding approach for the windings may be the wave winding or the lap winding. A parallel branch of the same phase winding coincides, after moving a certain number of stator slots 11, with another parallel branch in the winding. By adopting only two types of winding coils including the long-pitch hair-pin coil and the full-pitch hair-pin coil, the number of types of hair-pin coils required to be used would be greatly reduced. The number of molds required to be manufactured is further reduced, the cost is reduced, and the processing and manufacturing efficiency is increased. At the same time, for the phase spread distribution of the three phase windings, slot positions of q adjacent slots of the same polarity in the parallel branch of the same phase winding are shifted by 1 slot towards the adjacent pole, so that an equivalent pitch of a phase is less than the full pitch, thereby achieving an effect of a short pitch. In this way, a back electromotive force harmonic wave of the flat-wire motor is reduced, the flat-wire motor efficiency is enhanced, and an NVH (i.e., the noise, the vibration and the harshness) of a vehicle is optimized.

In the above-mentioned application scenario, the number n of slot layers of the stator slots 11 may be an even number such as 2, 4, 6, 8, 10, etc., each phase winding includes 3 parallel branches, the pitch combination of the hair-pin coil 21 in each parallel branch is 12, 16. In other words, the pitch of the long-pitch hair-pin coil is 16, the pitch of the full-pitch hair-pin coil is 12, and each of the welding pitches between the hair-pin coils of each parallel branch is 11.

In another application scenario, taking a 6-pole and 72-slot motor as an example, m=3, the number s of stator slots is 72, the number p of pole pairs of the rotor is 3, the number q of slots per pole per phase is 4, the number n of slot layers of the stator slot 11 is 4, the pitch of the long-pitch hair-pin coil is 16, and the pitch of the full-pitch hair-pin coil is 12.

In the above-mentioned application scenario, the first winding approach is adopted, and only 5 types of hair-pin coils are required in the stator winding 20.

As illustrated in Fig. 27, the first parallel branch of the U phase winding is fed into the winding at the voltage lead-out wire position U1, and exits the winding at the neutral point lead-out wire position X1. The slot numbers traversed by this series-connected first parallel branch are: 1(1)-12(2)-24(1)-35(2)-47(1)-58(2)-70(1)-9(2)-25(3)-36(4)-48(3)-59(4)-71(3)-10(4)-22 (3)→33(4)→21(4)→10(3)→70(4)→59(3)→47(4)→36(3)→24(4)→13(3)→69(2)→58(1)→46(2)→35(1)→23 (2)→12(1)→72(2)→61(1).

As illustrated in Fig. 28, the second parallel branch of the U phase winding is fed into the winding at the voltage lead-out wire position U2, and exits the winding at the neutral point lead-out wire position X2. The slot numbers traversed by this series-connected second parallel branch are: 71(1)→10(2)→22(1)→33(2)→49(3)→60(4)→72(3)→11(4)→23(3)→34(4)→46(3)→57(4)→45(4)→34(3)→ 22(4)→11(3)→71(4)→60(3)→48(4)→37(3)→21(2)→10(1)→70(2)→59(1)→47(2)→36(1)→24(2)→13(1)→ 25(1)→36(2)→48(1)→59(2).

As illustrated in Fig. 29, the third parallel branch of the U phase winding is fed into the winding at the voltage lead-out wire position U3, and exits the winding at the neutral point lead-out wire position X3. The slot numbers traversed by this series-connected third parallel branch are: 72(1)→11(2)→23(1)→34(2)→46(1)→57(2)→1(3)→12(4)→24(3)→35(4)→47(3)→58(4)→70(3)→9(4)→69 (4)→58(3)→46(4)→35(3)→23(4)→12(3)→72(4)→61(3)→45(2)→34(1)→22(2)→11(1)→71(2)→60(1)→48 (2)-37(1)-49(1)-60(2).

The serial numbers of the starting slots and the ending slots corresponding to the 3 parallel branches of the U phase winding are distributed as follows: U1 corresponds to 1(1), X1 corresponds to 61(1); U2 corresponds to 71(1), X2 corresponds to 59(2); U3 corresponds to 72(1), X3 corresponds to 60(2). U1, U2, and U3 are connected in parallel, and X1, X2, and X3 are connected in parallel. U1, U2, U3 and X1, X2, X3 are ultimately connected through the bus bar to form the finished U phase winding. U1, U2, and U3 are exactly located in q = 4 adjacent stator slots 11 of the same polarity, and X1, X2, and X3 are also exactly located in q=4 adjacent stator slots 11 of the same polarity.

In the above-mentioned application scenario, the second winding approach may be further adopted, and only 4 types of hair-pin coils are required in the stator winding 20.

The serial numbers of the starting slots and the ending slots corresponding to the 3 parallel branches of the U phase winding are distributed as follows: U1 corresponds to 1(1), X1 corresponds to 61(1); U2 corresponds to 25(1), X2 corresponds to 13(1); U3 corresponds to 49(1), X3 corresponds to 37(1). U1, U2, and U3 are connected in parallel, and X1, X2, and X3 are connected in parallel. U1, U2, U3 and X1, X2, X3 are ultimately connected through the bus bar to form the finished U phase winding. U1, U2, and U3 are exactly rotationally symmetric with respect to the stator core 10, any two of U1, U2, and U3 differ by 24 stator slots 11. X1, X2, and X3 are also exactly rotationally symmetric with respect to the stator core 10, any two of X1, X2, and X3 differ by 24 stator slots 11.

In the second type of winding approach, the first parallel branch of the U phase winding is fed into the winding at the voltage lead-out wire position U1, and exits the winding at the neutral point lead-out wire position X1. The slot numbers traversed by this series-connected first parallel branch are: 1(1)-12(2)-24(1)-35(2)-47(1)-58(2)-70(1)-9(2)-25(3)-36(4)-48(3)-59(4)-71(3)-10(4)-22 (3)-33(4)-21(4)-10(3)-70(4)-59(3)-47(4)-36(3)-24(4)-13(3)-69(2)-58(1)-46(2)-35(1)-23 (2)-12(1)-72(2)-61(1).

The second parallel branch of the U phase winding is fed into the winding at the voltage lead-out wire position U2, and exits the winding at the neutral point lead-out wire position X2. The slot numbers traversed by this series-connected second parallel branch are: 25(1)-36(2)-48(1)-59(2)-71(1)-10(2)-22(1)-33(2)-49(3)-60(4)-72(3)-11(4)-23(3)-34(4)-46(3)→57(4)→45(4)→34(3)→22(4)→11(3)→71(4)→60(3)→48(4)→37(3)→21(2)→10(1)→70(2)→59(1)→ 47(2)-36(1)-24(2)-13(1).

The third parallel branch of the U phase winding is fed into the winding at the voltage lead-out wire position U3, and exits the winding at the neutral point lead-out wire position X3. The slot numbers traversed by this series-connected third parallel branch are: 49(1)→60(2)→72(1)→11(2)→23(1)→34(2)→46(1)→57(2)→1(3)→12(4)→24(3)→35(4)→47(3)→58(4)→7 0(3)→9(4)→69(4)→58(3)→46(4)→35(3)→24(4)→12(3)→72(4)→61(3)→45(2)→34(1)→22(2)→11(1)→71 (2)-60(1)-48(2)-37(1).

Taking the 6-pole and 72-slot motor as an example, m=3, the number s of stator slots is 72, the number p of pole pairs of the rotor is 3, the number q of slots per pole per phase is 4. When the number n of slot layers of the stator slot 11 is 6, the first winding approach is adopted in the present embodiment, and 7 types of hair-pin coils are required in the stator winding 20. The serial numbers of the starting slots and the ending slots corresponding to the 3 parallel branches of the U phase winding are distributed as follows: U1 corresponds to 1(1), X1 corresponds to 61(1); U2 corresponds to 71(1), X2 corresponds to 59(2); U3 corresponds to 72(1), X3 corresponds to 60(2). U1, U2, and U3 are connected in parallel, and X1, X2, and X3 are connected in parallel. U1, U2, U3 and X1, X2, X3 are ultimately connected through the bus bar to form the finished U phase winding. U1, U2, and U3 are exactly located in q = 4 adjacent stator slots 11 of the same polarity, and X1, X2, and X3 are also exactly located in q=4 adjacent stator slots 11 of the same polarity.

As illustrated in Fig. 30, the first parallel branch of the U phase winding is fed into the winding at the voltage lead-out wire position U1, and exits the winding at the neutral point lead-out wire position X1. The slot numbers traversed by this series-connected first parallel branch are: 1(1)-12(2)-24(1)-35(2)-47(1)-58(2)-70(1)-9(2)-25(3)-36(4)-48(3)-59(4)-71(3)-10(4)-22 (3)→33(4)→49(5)→60(6)→72(5)→11(6)→23(5)→34(6)→46(5)→57(6)→45(6)→34(5)→22(6)→11(5)→71 (6)-60(5)-48(6)-34(5)-22(6)-11(5)-71(6)-60(5)-48(6)-37(5)-21(4)-10(3)-70(4)-59(3)-47 (4)→36(3)→24(4)→13(3)→69(2)→58(1)→46(2)→35(1)→23(2)→12(1)→61(1).

As illustrated in Fig. 31, the second parallel branch of the U phase winding is fed into the winding at the voltage lead-out wire position U2, and exits the winding at the neutral point lead-out wire position X2. The slot numbers traversed by this series-connected second parallel branch are: 71(1)→10(2)→22(1)→33(2)→49(3)→60(4)→72(3)→11(4)→23(3)→34(4)→46(3)→57(4)→1(5)→12(6)→2 4(5)-35(6)-47(5)-58(6)-70(5)-9(6)-69(6)-58(5)-46(6)-35(5)-23(6)-12(5)-72(6)-61(5)-45 (4)→34(3)→22(4)→11(3)→71(4)→60(3)→48(4)→37(3)→21(2)→10(1)→70(2)→59(1)→47(2)→36(1)→24 (2)→13(1)→25(1)→36(2)→48(1)→59(2).

As illustrated in Fig. 32, the third parallel branch of the U phase winding is fed into the winding at the voltage lead-out wire position U3, and exits the winding at the neutral point lead-out wire position X3. The slot numbers traversed by this series-connected third parallel branch are: 72(1)-11(2)-23(1)-34(2)-46(1)-57(2)-1(3)-12(4)-24(3)-35(4)-47(3)-58(4)-70(3)-9(4)-25 (5)-36(6)-48(5)-59(6)-71(5)-10(6)-22(5)-33(6)-21(6)-10(5)-70(6)-59(5)-47(6)-36(5)-24 (6)→13(5)→69(4)→58(3)→46(4)→35(3)→23(4)→12(3)→72(4)→61(3)→45(2)→34(1)→22(2)→11(1)→71 (2)→60(1)→48(2)→37(1)→49(1)→60(2).

When the second winding approach is adopted, only 6 types of hair-pin coils are required in the stator winding 20. The serial numbers of the starting slots and the ending slots corresponding to the 3 parallel branches of the U phase winding are distributed as follows: U1 corresponds to 1(1), X1 corresponds to 61(1); U2 corresponds to 25(1), X2 corresponds to 13(1); U3 corresponds to 49(1), X3 corresponds to 37(1).

The slot numbers traversed by the series-connected first parallel branch are the same as mentioned above, and will not be repeated here.

The slot numbers traversed by this series-connected second parallel branch are: 25(1)→36(2)→48(1)→59(2)→71(1)→10(2)→22(1)→33(2)→49(3)→60(4)→72(3)→11(4)→23(3)→34(4)→ 46(3)→57(4)→1(5)→12(6)→24(5)→35(6)→47(5)→58(6)→70(5)→9(6)→69(6)→58(5)→46(6)→35(5)→23 (6)→12(5)→72(6)→61(5)→45(4)→34(3)→22(4)→11(3)→71(4)→60(3)→48(4)→37(3)→21(2)→10(1)→70 (2)-59(1)-47(2)-36(1)-24(2)-13(1).

The slot numbers traversed by this series-connected third parallel branch are: 49(1)→60(2)→72(1)→11(2)→23(1)→34(2)→46(1)→57(2)→1(3)→12(4)→24(3)→35(4)→47(3)→58(4)→7 0(3)-9(4)-25(5)-36(6)-48(5)-59(6)-71(5)-10(6)-22(5)-33(6)-21(6)-10(35)-70(6)-59(5)-4 7(6)→36(5)→24(6)→13(5)→69(4)→58(3)→46(4)→35(3)→23(4)→12(3)→72(4)→61(3)→45(2)→34(1)→2 2(2)→11(1)→71(2)→60(1)→48(2)→37(1).

In another application scenario, a=2, then the pitch of the long-pitch hair-pin coil is s/(2p)+2, the pitch of the full-pitch hair-pin coil is s/(2p), and the pitch of the short-pitch hair-pin coil is s/(2p) -2.

Specifically, the number s of stator slots may be 72, the number p of pole pairs of the rotor is 3, and the number n of slot layers of the stator slots 11 may be one of 4, 6, 8, and 10. Therefore, the pitch of the long-pitch hair-pin coil is 14, the pitch of the full-pitch hair-pin coil is 12, and the pitch of the short-pitch hair-pin coil is 10. In other words, the pitch combination of the hair-pin coils 21 in each parallel branch is 10, 12, and 14, each of the welding pitches between the hair-pin coils of each parallel branch is 13.

Taking the 6-pole and 72-slot motor as an example, m=3, the number s of stator slots is 72, the number p of pole pairs of the rotor is 3, the number q of slots per pole per phase is 4. The number n of slot layers of the stator slot 11 is 4.

In the above-mentioned application scenario, the first winding approach is adopted, and only 5 types of hair-pin coils are required in the stator winding 20.

As illustrated in Fig. 33, the first parallel branch of the U phase winding is fed into the winding at the voltage lead-out wire position U1, and exits the winding at the neutral point lead-out wire position X1. The slot numbers traversed by this series-connected first parallel branch are: 72(1)-13(2)-23(1)-36(2)-46(1)-59(2)-69(1)-10(2)-24(3)-37(4)-47(3)-60(4)-70(3)-11(4)-21(3)→34(4)→22(4)→9(3)→71(4)→58(3)→48(4)→35(3)→25(4)→12(3)→70(2)→57(1)→47(2)→34(1)→2 4(2)→11(1)→1(2)→60(1).

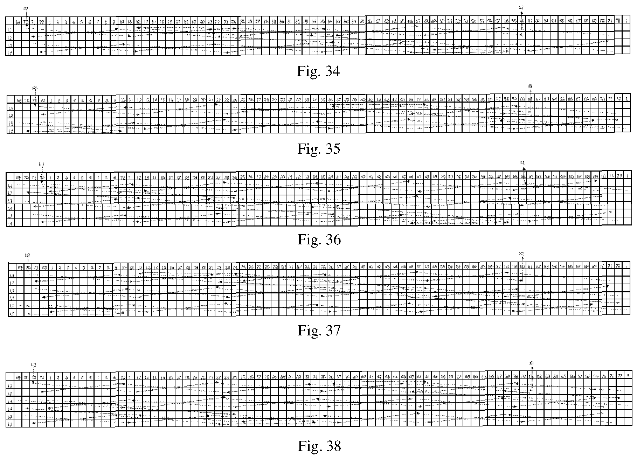

As illustrated in Fig. 34, the second parallel branch of the U phase winding is fed into the winding at the voltage lead-out wire position U2, and exits the winding at the neutral point lead-out wire position X2. The slot numbers traversed by this series-connected second parallel branch are: 70(1)→11(2)→21(1)→34(2)→48(3)→61(4)→71(3)→12(4)→22(3)→35(4)→45(3)→58(4)→46(4)→33(3)→ 23(4)→10(3)→72(4)→59(3)→49(4)→36(3)→22(2)→9(1)→71(2)→58(1)→48(2)→35(1)→25(2)→12(1)→2 4(1)→37(2)→47(1)→60(2).

As illustrated in Fig. 35, the third parallel branch of the U phase winding is fed into the winding at the voltage lead-out wire position U3, and exits the winding at the neutral point lead-out wire position X3. The slot numbers traversed by this series-connected third parallel branch are: 71(1)-12(2)-22(1)-35(2)-45(1)-58(2)-72(3)-13(4)-23(3)-36(4)-46(3)-59(4)-69(3)-10(4)-70(4)→57(3)→47(4)→34(3)→24(4)→11(3)→1(4)→60(3)→46(2)→33(1)→23(2)→10(1)→72(2)→59(1)→4 9(2)-36(1)-48(1)-61(2).

The slot numbers of the starting slots and the ending slots corresponding to the 3 parallel branches are distributed as follows: U1 corresponds to 72(1), X1 corresponds to 60(1); U2 corresponds to 70(1), X2 corresponds to 60(2); U3 corresponds to 71(1), X3 corresponds to 61(2).

In the above-mentioned application scenario, the second winding approach is adopted, and only 4 types of hair-pin coils are required in the stator winding 20. The difference between the second winding approach and the first winding approach lies in the starting slots and the ending slots of the parallel branches. The other specific winding approaches may be referred to the above-mentioned first winding approach, and will not be repeated here. The slot numbers of the starting slots and the ending slots corresponding to the 3 parallel branches are distributed as follows: U1 corresponds to 72(1), X1 corresponds to 60(1); U2 corresponds to 24(1), X2 corresponds to 12(1); U3 corresponds to 48(1), X3 corresponds to 36(1).

Taking the 6-pole and 72-slot motor as an example, m=3, the number s of stator slots is 72, the number p of pole pairs of the rotor is 3, the number q of slots per pole per phase is 4, the number n of slot layers of the stator slot 11 is 6. The first winding approach is adopted in the present embodiment, and 7 types of hair-pin coils are required in the stator winding 20.

As illustrated in Fig. 36, the first parallel branch of the U phase winding is fed into the winding at the voltage lead-out wire position U1, and exits the winding at the neutral point lead-out wire position X1. The slot numbers traversed by this series-connected first parallel branch are: 72(1)-13(2)-23(1)-36(2)-46(1)-59(2)-69(1)-10(2)-24(3)-37(4)-47(3)-60(4)-70(3)-11(4)-21(3)-34(4)-48(5)-61(6)-71(5)-12(6)-22(5)-35(6)-45(5)-58(6)-46(6)-33(5)-23(6)-10(5)-72(6)→59(5)→49(6)→36(5)→22(4)→9(3)→71(4)→58(3)→48(4)→35(3)→25(4)→12(3)→70(2)→57(1)→4 7(2)→34(1)→24(2)→11(1)→1(2)→60(1).

As illustrated in Fig. 37, the second parallel branch of the U phase winding is fed into the winding at the voltage lead-out wire position U2, and exits the winding at the neutral point lead-out wire position X2. The slot numbers traversed by this series-connected second parallel branch are: 70(1)→11(2)→21(1)→34(2)→48(3)→61(4)→71(3)→12(4)→22(3)→35(4)→45(3)→58(4)→72(5)→13(6)→ 23(5)→36(6)→46(5)→59(6)→69(5)→10(6)→70(6)→57(5)→47(6)→34(5)→24(6)→11(5)→1(6)→60(5)→4 6(4)→33(3)→23(4)→10(3)→72(4)→59(3)→49(4)→36(3)→22(2)→9(1)→71(2)→58(1)→48(2)→35(1)→25 (2)→12(1)→24(1)→37(2)→47(1)→60(2).

As illustrated in Fig. 38, the third parallel branch of the U phase winding is fed into the winding at the voltage lead-out wire position U3, and exits the winding at the neutral point lead-out wire position X3. The slot numbers traversed by this series-connected third parallel branch are: 71(1)→12(2)→22(1)→35(2)→45(1)→58(2)→72(3)→3(4)→23(3)→36(4)→46(3)→59(4)→69(3)→10(4)→2 4(5)→37(6)→47(5)→60(6)→70(5)→11(6)→21(5)→34(6)→22(6)→9(5)→71(6)→58(5)→48(6)→35(5)→25 (6)→12(5)→70(4)→57(3)→47(4)→34(3)→24(4)→11(3)→1(4)→60(3)→46(2)→33(1)→23(2)→10(1)→72( 2)-59(1)-49(2)-36(1)-48(1)-61(2).

The serial numbers of the starting slots and the ending slots corresponding to the 3 parallel branches of the U phase winding are distributed as follows: U1 corresponds to 72(1), X1 corresponds to 60(1); U2 corresponds to 70(1), X2 corresponds to 60(2); U3 corresponds to 71(1), X3 corresponds to 61(2).

After winding according to the winding approaches in some embodiments of the present disclosure, a comparison with the related art is made based on a back electromotive force harmonic wave content at a peak torque operating condition point of the 6-pole and 72-slot flat-wire motor. The back electromotive force harmonic wave content of a motor with the full-pitch winding in the related art is 4.75%, while after adoption the winding approaches of the embodiments of the present disclosure, the back electromotive force harmonic wave content becomes 3.98%, a reduction of 16.2% is achieved. This demonstrates that, the winding approaches provided in the present disclosure may reduce the back electromotive force harmonic wave, and enhance the motor efficiency.

According to another aspect of the present disclosure, a powertrain is further provided. The powertrain includes a reducer and the above-mentioned flat-wire motor. The flat-wire motor is connected to the reducer in a transmission manner. Specifically, a drive shaft of the flat-wire motor and an input shaft of the reducer may be drivingly connected through a transmission component such as a coupling etc., so as to transmit a driving force from the flat-wire motor to the reducer.

According to yet another aspect of the present disclosure, a vehicle is further provided. The vehicle includes the above-mentioned powertrain. The above-mentioned powertrain is arranged within the vehicle, and is configured to provide driving power for the vehicle. Specifically, in the present embodiment, the vehicle may be a new energy vehicle driven by the electrical energy. The new energy vehicle may specifically be a hybrid electric vehicle, a pure electric vehicle, or a fuel cell electric vehicle. The new energy electric vehicle may also be a vehicle that uses high-efficiency energy storage devices as a source of electrical energy. The high-efficiency energy storage devices are such as supercapacitors, flywheel batteries, or flywheel energy storage systems, etc.

Distinguished from the related art, the present disclosure provides the stator, the flat-wire motor, the powertrain and the vehicle. By configuring the plurality of parallel branches of each phase winding to be rotationally symmetric in the circumferential direction, the magnetic field distribution among the plurality of parallel branches of each phase winding remains the same, and the electrical potentials are balanced. In this way, the circulating currents generated between the parallel branches are avoided, thereby significantly reducing the additional alternating current copper losses at high frequencies. The efficiency of the flat-wire motor during a high-speed operation is enhanced, local overheating of the windings is avoided, and the service life of the flat-wire motor is extended. Further, the hair-pin coils of each parallel branch traverse through N slot layers in different stator slots, thereby eliminating the electrical potential phase differences of each phase winding caused by positions of the plurality of parallel branches in the stator slots. By limiting the number N of the slot layers in the stator slot and the corresponding total number of the slot layers occupied by each parallel branch in each stator slot, the number of types of wire profiles for the hair-pin coils is reduced. This in turn decreases the number of manufacturing molds required for the flat-wire motor, thereby lowering the manufacturing cost and effectively enhancing the processing and manufacturing efficiency.

In the description of the present disclosure, the description with reference to the terms "an embodiment", "some embodiments", "examples", "specific examples", or "some examples" means that, the specific features, mechanisms, materials, or characteristics described in conjunction with the embodiments or examples are included in at least one embodiment or example of the present disclosure. In this specification, schematic expressions of the above-mentioned terms do not necessarily refer to the same embodiment or example. Moreover, the specific features, mechanisms, materials, or characteristics described may be combined in any one or more embodiments or examples in a suitable manner. Furthermore, those skilled in the art may incorporate and combine different embodiments or examples and features of different embodiments or examples described in this specification without mutual conflict.

The above are only implementations of the present disclosure, and do not limit the patent scope of the present disclosure. Any equivalent structure or equivalent process alternation made based on the contents of the present specification and the accompanying drawings of the present disclosure, or direct or indirect application of the present disclosure in other related technical fields, shall likewise be included within the patent protection scope of the present disclosure.

## Claims

1. A stator of a flat-wire motor, comprising:
a stator core, wherein an inner wall of the stator core is provided with a plurality of stator slots equally spaced along a circumferential direction of the inner wall;
a stator winding comprising three phase windings, wherein each phase winding of the three phase windings comprises a plurality of parallel branches, the plurality of parallel branches are rotationally symmetric along the circumferential direction, each parallel branch of the plurality of parallel branches comprises a plurality of hair-pin coils that are connected through a connection wire and have different pitches, N layers of the hair-pin coils are provided in each stator slot of the plurality of stator slots , the hair-pin coils of each of the plurality of parallel branches traverse through N slot layers in different stator slots , the three phase windings are arranged in a periodic manner along the circumferential direction of the stator core;
in response to N = (2n+1) ×2, a combination of the total number of the slot layers occupied by each of the plurality of parallel branches in each stator slot is 2n, or the combination is 2n, 2n-1, 2n-2;
in response to N = (2n) ×2, the combination of the total number of the slot layers occupied by each of the plurality of parallel branches in each stator slot is 2n, 2n-1, or the combination is 2n, 2n-1, 2n-2; and
in response to N = (2n) + 1, the combination of the total number of the slot layers occupied by each of the plurality of parallel branches in each stator slot is n, n-1, or the combination is n, n-1, n-2;
wherein N is a positive integer greater than or equal to 4, and the total number of the slot layers occupied by each of the plurality of parallel branches in each stator slot is also a positive integer.

2. The stator as claimed in claim 1, wherein
in response to the total number of the slot layers occupied by each of the plurality of parallel branches in the stator slot being 1, a position of the 1 slot layer is either a first layer or an N-th layer of the stator slot;
in response to the total number of the slot layers occupied by each of the plurality of parallel branches in the stator slot being 2, the 2 slot layers are arranged as adjacent to each other in the stator slot, or the 2 slot layers are arranged as the first layer and the N-th layer of the stator slot, respectively;
in response to the total number of the slot layers occupied by each of the plurality of parallel branches in the stator slot being 3, two of the 3 slot layers are arranged as adjacent to each other, a position of the remaining 1 slot layer is either the first layer or the N-th layer of the stator slot, and is separated by four slot layers from the other two slot layers of the 3 slot layers; and
in response to the total number of the slot layers occupied by each of the plurality of parallel branches in the stator slot being 4, the 4 slot layers are divided into two groups separated by four slot layers, each group comprises two slot layers adjacent to each other.

3. The stator as claimed in claim 2, wherein
each phase winding comprises three parallel branches.

4. The stator as claimed in claim 3, wherein
the number of the stator slots is 54 or 72.

5. The stator as claimed in claim 3 or 4, wherein
a pitch combination of the hair-pin coils of each parallel branch is 8, 9, 11, 12, 16.

6. The stator as claimed in claim 3 or 4, wherein
the pitches of the hair-pin coils of each parallel branch in a same slot layer are all 9.

7. The stator as claimed in claim 3 or 4, wherein
the pitches of the hair-pin coils of each parallel branch in a first slot layer or an N-th slot layer are 8, or the pitches are 8, 11.

8. The stator as claimed in claim 3 or 4, wherein
a lead-in end of each parallel branch is located at an N-th layer of the slot layers, and a lead-out end is located at an (N-1)-th layer of the slot layers; or
the lead-in end and the lead-out end of each parallel branch are both at a first slot layer and the N-th slot layer.

9. The stator as claimed in claim 3 or 4, wherein
welding pitches between the hair-pin coils of each parallel branch are 9 or 11.

10. The stator as claimed in any of claims 1-4, wherein
each parallel branch comprises a long-pitch hair-pin coil, a full-pitch hair-pin coil and a short-pitch hair-pin coil, a pitch of the long-pitch hair-pin coil is s/(2p)+a, a pitch of the full-pitch hair-pin coil is s/(2p), and a pitch of the short-pitch hair-pin coil is s/(2p)+a-4,
wherein s is the number of stator slots , p is the number of the plurality of parallel branches, and a is an integer greater than or equal to 2 and less than or equal to 4.

11. The stator as claimed in claim 10, wherein
in each parallel branch, a first leg of the short-pitch hair-pin coil is located at a k-th slot layer, a second leg of the short-pitch hair-pin coil is located at a (k+1)-th slot layer, a first leg of the long-pitch hair-pin coil is located in the (k+1)-th slot layer, a second leg of the long-pitch hair-pin coil is located at a (k+2)-th slot layer, a first leg and a second leg of the full-pitch hair-pin coil are both located at either the first slot layer or at the n-th slot layer;
wherein k is an odd number greater than or equal to 1 and less than or equal to n.

12. The stator as claimed in claim 11, wherein
the number of slots per pole per phase of the flat-wire motor is q,
voltage lead-out wires of p parallel branches of each phase winding are located in s stator slots , and are at a same slot layer or adjacent slot layers of different stator slots , and
neutral point lead-out wires of the p parallel branches of each phase winding are located in s stator slots , and are at a same slot layer or adjacent slot layers of different stator slots .

13. The stator as claimed in claim 11, wherein
the voltage lead-out wires and the neutral point lead-out wires are all located at the first slot layer or at the n-th slot layer.

14. The stator as claimed in claim 12 or 13, wherein
welding pitches between the hair-pin coils of each parallel branch are all s/(2p).

15. The stator as claimed in claim 11, wherein
n is an even number, a = 4, the short-pitch hair-pin coil is the full-pitch hair-pin coil,
in a phase spread distribution of the three phase windings, polarity distribution of all odd-numbered layers is the same, and polarity distribution of all even-numbered layers is also the same but is offset by one stator slot relative to the polarity distribution of all the odd-numbered layers.

16. The stator as claimed in claim 11, wherein
the number of slot layers of the stator slots is one of 4, 6, 8, or 10,
a pitch combination of the hair-pin coils of each parallel branch is 10, 12, 14,
welding pitches between the hair-pin coils of each parallel branch are all 13.

17. The stator as claimed in claim 1, wherein
each hair-pin coil comprises a first leg, a second leg, a connection segment, a first bent segment and a second bent segment,
the first leg and the second leg are arranged in parallel and are inserted into slot layers in different stator slots respectively,
the connection segment is connected to one end of the first leg and one end of the second leg,
the first bent segment is connected to another end of the first leg, the second bent segment is connected to another end of the second leg, and
each of the first bent segment and the second bent segment is further connected to a welding end.

18. The stator as claimed in claim 17, wherein
a bending direction of the first bent segment is parallel to that of the second bent segment; or
the bending direction of the first bent segment is symmetrical to that of the second bent segment.

19. A flat-wire motor comprising a rotor and a stator as claimed in any of claims 1-18, wherein
the rotor is arranged within a space enclosed by the inner wall of the stator core.

20. A powertrain comprising a reducer and the flat-wire motor as claimed in claim 19, wherein
the flat-wire motor is connected to the reducer in a transmission manner.

21. A vehicle comprising the powertrain as claimed in claim 20.
